(19) Europäisches Patentamt

European Patent Office

Office européen des brevets

(11) **EP 1 052 573 B1**

(12) **FASCICULE DE BREVET EUROPEEN**

(45) Date de publication et mention
de la délivrance du brevet:
**18.08.2004 Bulletin 2004/34**

(51) Int Cl.⁷: **G06F 13/36**, G06F 7/00

(21) Numéro de dépôt: **00400642.5**

(22) Date de dépôt: **09.03.2000**

(54) **Procédé et dispositif pour commander l'ordre de départ d'informations ou d'objets stockés temporairement**

Methode und Einheit zum Steuern der Ausgabe-Ordnung von temporär gespeicherten Daten oder Objekten

Method and device for controlling the output-order of temporarily stored data or objects

(84) Etats contractants désignés:
**AT BE CH CY DE DK ES FI FR GB GR IE IT LI LU MC NL PT SE**

(30) Priorité: **10.05.1999 FR 9905927**

(43) Date de publication de la demande:
**15.11.2000 Bulletin 2000/46**

(73) Titulaire: **ALCATEL**
**75008 Paris (FR)**

(72) Inventeur: **Henrion, Michel**
**1180 Bruxelles (BE)**

(74) Mandataire: **Sciaux, Edmond et al**
**Compagnie Financière Alcatel**
**Département de Propriété Industrielle,**
**5, rue Noel Pons**
**92734 Nanterre Cedex (FR)**

(56) Documents cités:
**US-A- 4 005 391**      **US-A- 4 814 974**
**US-A- 5 303 382**

## Description

L'invention est relative à un dispositif et à un procédé pour déterminer l'ordre de départ (ou service) d'informations ou d'objets stockés temporairement.

Elle concerne, en particulier, l'évacuation d'un flux d'informations ou d'objets arrivant en un emplacement donné où ils sont stockés temporairement et d'où ils doivent être évacués suivant un ordre dépendant de critères divers.

Une telle évacuation ou "service" pose des problèmes difficiles à résoudre, notamment quand le débit d'arrivée et le débit d'évacuation sont élevés.

Ce problème se pose plus particulièrement dans les réseaux de télécommunications quand des signaux d'informations numériques sont transmis sous forme de cellules ou paquets et sont stockés temporairement dans des mémoires tampons. Ces cellules ou paquets supportant des communications avec différentes qualités de service, il est courant de leur affecter des débits et des priorités relatives de services différents. Afin de commander la sortie des paquets ou cellules de cette mémoire tampon en fonction de leur priorité relative, il faut donc qu'en permanence soit déterminé l'ordre de service (ou d'évacuation) des paquets ou cellules se trouvant dans la mémoire tampon.

Des problèmes semblables d'établissement d'ordre de distribution peuvent aussi se poser dans d'autres domaines techniques tels que, par exemple, les arrivées et départs d'avion dans un aéroport, ou les arrivées et départs de train dans une gare.

De façon générale, les disciplines de service d'une mémoire tampon sont classées en deux catégories selon le moment où est déterminé l'ordre de service, à savoir :

- les files d'attente de type "premier-entré-premier-sorti" (FIFO) dans lesquelles l'ordre de service est déterminé lors de l'arrivée des paquets ou cellules dans la mémoire tampon ;
- et les dispositifs d'ordonnancement dans lesquels l'ordre de service est déterminé lors de la sortie des paquets ou cellules de la mémoire tampon.

Le document **US 4.005.391** décrit un dispositif pour déterminer l'ordre de priorité d'interruption d'un processeur auquel plusieurs périphériques peuvent accéder, mais non simultanément. Les valeurs des signaux de demande d'interruption à traiter sont mémorisées dans un dispositif d'entrée-sortie. Les informations de priorité sont mémorisées dans les éléments d'une mémoire : c'est la position d'un bit de valeur 1 dans une suite de bits de valeur 0 qui détermine la priorité de service pour un périphérique. Le contenu de la mémoire est balayé par le compteur d'adresses pour réaliser une sorte de transcodage de la valeur fournie par ce compteur, cette valeur étant incrémentée régulièrement. La mémoire a huit sorties parmi lesquelles il n'y en a qu'une qui fournit la valeur 1, le contenu de la mémoire étant choisi de manière à ce que tous les périphériques aient des niveaux de priorité différents. Chaque sortie de la mémoire fournit successivement la valeur 1 pour valider successivement des portes ET.

Une porte ET validée sur une de ses entrées transmet la demande d'interruption qu'elle reçoit éventuellement sur son autre entrée. Le balayage est arrêté dès qu'une porte ET a transmis un signal actif de demande d'interruption. Ce balayage permet de considérer successivement les sources des demandes d'interruption selon un certain ordre de priorité en validant successivement des portes, mais rien n'est prévu pour définir dynamiquement des priorités respectivement pour chaque demande d'interruption.

Le document WO97/24904 décrit un appareil utilisé dans un réseaux de télécommunications pour l'évacuation d'un flux de données arrivant en un emplacement donné où ils sont stockés temporairement et d'où ils doivent être évacués ou "servi" suivant un ordre dépendant de critères de priorité divers.

La présente invention porte sur un dispositif d'ordonnancement permettant de tenir compte, à tout instant, des priorités relatives respectives des différents paquets ou cellules stockés dans la mémoire tampon d'un commutateur ATM par exemple.

La détermination de l'ordre de service dans un tel dispositif d'ordonnancement est assurée par un algorithme permettant une sélection basée sur les paramètres temporels associés aux paquets ou cellules qui sont stockés dans la mémoire tampon. Pour gérer ces paramètres temporels, on utilise jusqu'à présent des mémoires vives organisées en tables ou en listes chaînées, ou des mémoires adressables par le contenu. De tels dispositifs entraînent des temps de traitement pouvant être incompatibles avec un fonctionnement à haut débit dans lequel le temps alloué à chaque service est très court.

L'invention fournit un dispositif permettant de définir dynamiquement un ordonnancement, en un temps très court.

Dans ce qui suit, pour simplifier, on désignera quelquefois par "objet" une information ou un objet traité dans le dispositif.

Selon l'invention, un dispositif pour déterminer l'ordre de service d'objets stockés temporairement dans une mémoire tampon, au moins un indicateur de priorité étant attaché à ces objets, comprenant :

- un ensemble d'éléments de mémorisation, comportant des mémoires vives et disposés suivant un réseau matriciel organisé en C sous-ensembles d'éléments, C étant le nombre d'objets qui peut être stockés temporairement, chacun de ces sous-ensembles correspondant à un objet et tous les sous-ensembles comprenant le même nombre P d'éléments correspondant à P positions temporelles, chaque élément comprenant une mémoire susceptible de recevoir au moins un type d'indicateur de priorité temporelle,

- des moyens pour inscrire, lors de la réception d'un nouvel objet, un indicateur de priorité temporelle dans l'élément de mémorisation correspondant à cet object et à la position temporelle attribuée à cet objet,
- et des moyens de sélection de première position temporelle pour déterminer, dans le réseau, parmi tous les sous-ensembles, l'élément (ou les éléments) qui est (sont) marqué(s) par un indicateur de priorité temporelle de type déterminé et qui correspond(ent) à la position temporelle ayant la plus petite valeur.

**est caractérisé** en ce que les moyens pour inscrire comportent des moyens pour inscrire, lors de chaque demande de service, un indicateur de priorité temporelle dans un élément de mémorisation correspondant à l'objet représentant cette demande de service.

Ainsi, les indicateurs de priorité peuvent être inscrit dynamiquement dans une matrice d'éléments de mémorisation, chaque ligne correspondant, par exemple, à un sous-ensemble, c'est-à-dire à un objet, et chaque colonne à une position temporelle déterminée. Parmi les lignes présentant un élément contenant un indicateur de priorité, on affectera la plus grande priorité à celle(s) dont l'indicateur se trouve au rang le plus faible.

Dans une réalisation, on prévoit des moyens de sélection prioritaire d'objets permettant de sélectionner, dans le réseau, un seul des sous-ensembles parmi ceux qui ont été présélectionnés par les moyens de sélection de première position temporelle. En variante, on sélectionne un nombre prédéterminé d'objets à servir simultanément parmi ceux qui ont été présélectionnés. On peut aussi servir simultanément tous les objets présélectionnés.

Ainsi, dans ces réalisations, le dispositif comprend des moyens de sélection prioritaire d'objets permettant de sélectionner au moins un des sous-ensembles parmi ceux qui ont été présélectionnés par les moyens de sélection de première position temporelle.

Dans une réalisation, pour tenir compte de la progression du temps d'horloge, à chaque temps d'horloge on introduit un décalage d'une position temporelle entre les indicateurs de priorité temporelle de chaque sous-ensemble et le rang correspondant à leur position temporelle, de telle sorte que leur nouveau rang corresponde à la position temporelle adjacente inférieure.

Un tel décalage d'une position temporelle est effectué à la fin de chaque temps de service d'objet dans le cas où le service est périodique à chaque temps d'horloge. Ce décalage de position temporelle est, par exemple, effectué en transférant le contenu de la mémoire de chaque élément vers l'élément voisin correspondant à la position temporelle adjacente inférieure.

En variante, les contenus des mémoires des éléments ne sont pas modifiés, mais leurs rangs sont décalés, chaque rang d'un élément étant diminué d'une unité.

Selon un mode de réalisation les moyens de sélection prioritaire d'objet(s) sont connectés aux éléments de mémorisation par l'intermédiaire d'une ligne entrante par sous-ensemble, cette ligne transmettant un signal dit d'objet sélectionné, et effectuent le choix final d'au moins un objet devant être servi parmi les objets correspondant aux sous-ensembles transmettant un signal d'objet sélectionné.

Selon un mode de réalisation, les moyens de sélection de première position temporelle sont connectés aux éléments de mémorisation par l'intermédiaire de deux lignes communes pour chacune des P positions temporelles, à savoir une ligne commune entrante pour recevoir un signal de position temporelle candidate pour sélection, et une ligne commune sortante pour transmettre un signal de position temporelle retenue. Dans ce cas, les moyens de sélection de première position temporelle, d'une part, identifient, parmi les P signaux reçus sur les lignes communes entrantes, le premier signal de position temporelle candidate pour sélection correspondant à la position temporelle ayant la plus petite valeur, et, d'autre part, indiquent cette première position temporelle sélectionnée en transmettant un signal de position temporelle retenue sur la ligne commune sortante correspondant à la première position temporelle sélectionnée.

Selon un mode de réalisation, pour chaque sous-ensemble, la position temporelle de l'élément dans lequel se trouve un indicateur de priorité temporelle représente le moment souhaité pour effectuer le service de l'objet correspondant à ce sous-ensemble par rapport aux autres objets, les moyens de sélection de première position temporelle sélectionnant en priorité l'objet (ou les objets) dont l'indicateur de priorité est situé dans un élément correspondant à la position temporelle de plus petite valeur.

Selon un mode de réalisation, chaque élément de mémorisation :

active la ligne commune entrante correspondante des moyens de sélection de première position temporelle pour transmettre, à ces derniers, un signal de position temporelle candidate pour sélection si ledit indicateur de priorité temporelle est marqué dans sa mémoire,

reçoit, des moyens de sélection de première position temporelle, sur une ligne commune sortante par position temporelle, un signal de position temporelle retenue lorsque ces moyens de sélection de première position temporelle indiquent que la position temporelle de cet élément a été sélectionnée, et

engendre, sur une ligne commune par sous-ensemble, un signal d'objet sélectionné destiné aux moyens de sélection prioritaire d'objet, lorsque simultanément :

- l'indicateur de priorité temporelle est marqué dans sa mémoire,
- et le signal de position temporelle retenue est reçu de la ligne commune sortante des moyens de sélection de première position temporelle.

Selon un mode de réalisation, pour chaque sous-ensemble, un indicateur de priorité temporelle représente le dernier moment souhaité pour effectuer le service de l'objet.

Selon un mode de réalisation, à chaque sous-ensemble, est également attaché au moins l'un et/ou l'autre des deux indicateurs de priorité supplémentaires suivants :

un indicateur de position temporelle de sélection autorisée au plus tôt avant laquelle l'objet ne peut être servi, cet indicateur ayant une position temporelle de plus petite valeur que celle de l'indicateur représentant le dernier moment souhaité pour effectuer le service, et
un indicateur de position temporelle de sélection optimale pour effectuer le service, la position temporelle de cet indicateur ayant une valeur inférieure à celle de l'indicateur de dernier moment souhaité pour effectuer le service.

En outre, lorsque ces deux indicateurs de priorité supplémentaires sont présents simultanément, l'indicateur de position temporelle de sélection optimale présente une valeur qui est supérieure à celle de l'indicateur de sélection autorisée au plus tôt avant lequel l'objet ne peut être servi.

Selon un mode de réalisation, plusieurs indicateurs de priorité temporelle de types différents étant attachés à chaque sous-ensemble, le dispositif comporte un nombre de réseaux d'éléments indicateurs égal au nombre de types d'indicateurs.

Selon un mode de réalisation, plusieurs indicateurs de types différents étant affectés à chaque sous-ensemble, chaque élément comporte un nombre de points de mémoires au moins égal au nombre de types d'indicateurs, chaque point de mémoire étant affecté à un indicateur de type déterminé.

Selon un mode de réalisation, le dispositif comporte des moyens de recherche des indicateurs tels qu'au cours d'une première phase, on recherche, dans chaque sous-ensemble, le premier indicateur de priorité temporelle qui présente, parmi tous les indicateurs du sous-ensemble, la position temporelle de valeur la plus élevée, et après avoir présélectionné les sous-ensembles qui présentent ce premier indicateur à la position temporelle la plus faible, au cours d'une seconde phase, on effectue la recherche des indicateurs suivants de position temporelle inférieure dans les sous-ensembles présélectionnés, et on sélectionne les sous-ensembles qui présentent un indicateur suivant à la position temporelle la plus faible.

Selon un mode de réalisation :

- chaque élément mémorise un seul indicateur de priorité,
- un indicateur de dernier moment, un indicateur de sélection autorisée au plus tôt et un indicateur de moment optimal sont affectés à chaque sous-ensemble, ces indicateurs correspondant, dans chaque sous-ensemble, à des positions temporelles différentes,
- les moyens de sélection prioritaire d'objet comprennent des moyens supplémentaires pour engendrer un signal de recherche d'indicateurs de priorité temporelle pour chacun des sous-ensembles dont l'indicateur de sélection autorisée au plus tôt a atteint ces moyens de sélection prioritaire d'objet en passant au-delà de la plus petite position temporelle pour atteindre la position temporelle du serveur,
- et les moyens de sélection de première position temporelle comprennent des moyens additionnels pour effectuer deux phases successives de sélection des autres indicateurs de priorité, d'abord en présélectionnant l'objet (ou les objets) dont la position temporelle de l'indicateur de dernier moment a la plus petite valeur, puis en sélectionnant, parmi les sous-ensembles présélectionnés, l'objet (ou les objets) dont la position temporelle de l'indicateur de moment optimal a la plus petite valeur.

Selon un mode de réalisation, les moyens de sélection prioritaire d'objet comportent également, pour chaque sous-ensemble, une mémoire dans laquelle sont enregistrées :

- une information de sélection autorisée dès que la position temporelle de l'indicateur de priorité de sélection autorisée a atteint la position temporelle du serveur, et
- une information de position optimale atteinte dès que la position temporelle de l'indicateur de priorité de position optimale a atteint la position temporelle du serveur.

Selon un mode de réalisation, les moyens de sélection prioritaire d'objet sont connectés à chaque sous-ensemble du réseau d'éléments par l'intermédiaire :

- d'une ligne sortante connectée à l'élément du sous-ensemble qui correspond à la position temporelle ayant la plus grande valeur, lui permettant d'engendrer, pour le sous-ensemble correspondant, un signal d'activation de recherche d'indicateurs, pour déclencher une opération de recherche d'un premier indicateur à sélectionner en priorité dans le sous-ensemble ; et
- d'une ligne entrante provenant de l'élément du sous-ensemble qui correspond à la position temporelle ayant la plus petite valeur, lui permettant de recevoir un signal dit d'objet sélectionné, et d'effectuer le choix final d'au moins un objet devant être servi parmi les sous-ensembles desquels il reçoit un signal d'objet sélectionné.

Selon un mode de réalisation, chaque élément de mémorisation est connecté :

- à l'élément du même sous-ensemble correspondant à la position temporelle adjacente supérieure, par une entrée de recherche d'indicateurs permettant de recevoir un signal de recherche d'indicateurs, l'élément du sous-ensemble ayant la plus grande valeur de position temporelle recevant un signal de recherche d'indicateurs fourni par les moyens de sélection prioritaire d'objets,
- et à l'élément de mémorisation, du même sous-ensemble correspondant à la position temporelle adjacente inférieure, par une sortie de recherche d'indicateurs permettant de transmettre un signal de recherche d'indicateurs, l'élément ayant la plus petite valeur de position temporelle fournissant aux moyens de sélection prioritaire d'objet ce signal de recherche d'indicateurs qui, lorsqu'il est actif, signifie, pour ces moyens, un signal d'objet sélectionné.

En outre, dans cette réalisation, chaque élément de mémorisation :

- active la ligne commune entrante correspondante des moyens de sélection temporelle, pour transmettre à ces derniers un signal de position temporelle candidate pour sélection lorsque, simultanément, un signal de recherche d'indicateurs actif est reçu et ledit indicateur de priorité temporelle est marqué dans la mémoire de cet élément,
- active un signal local d'indicateur de priorité non sélectionné lorsque simultanément :

    - un signal de recherche d'indicateurs actif est reçu,
    - un indicateur de priorité temporelle est marqué dans sa mémoire, et
    - un signal de position temporelle retenue n'est pas reçu de la ligne commune sortante provenant des moyens de sélection temporelle,
    - et retransmet à l'élément du même sous-ensemble qui a la position temporelle adjacente inférieure, un signal de recherche d'indicateurs actif si simultanément :

        - un signal de recherche d'indicateurs actif est reçu, et
        - soit l'élément n'a pas d'indicateur de priorité temporelle marqué dans sa mémoire,
        - soit l'élément a un indicateur de priorité temporelle marqué dans sa mémoire et le signal local indicateur de priorité non sélectionné n'est pas activé, le signal local indicateur de priorité non sélectionné ayant donc pour effet de bloquer la propagation du signal de recherche d'indicateurs vers les autres éléments du sous-ensemble de rang inférieur lorsque l'élément a transmis un signal de position temporelle candidate pour sélection aux moyens de sélection temporelle, mais que ces moyens n'ont pas retourné un signal de position temporelle retenue.

L'invention concerne en outre une application du dispositif à la gestion de cellules ou paquets de signaux numériques dans une mémoire tampon d'un système de télécommunication dans laquelle les cellules ou paquets entrent et sortent à une fréquence élevée.

D'autres caractéristiques et avantages de l'invention apparaîtront avec la description de certains de ses modes de réalisation, celle-ci étant effectuée en se référant aux dessins ci-annexés, sur lesquels :

la figure 1 est un schéma d'un dispositif de commande selon l'invention,
les figures 2, 2a et 2b sont des diagrammes illustrant un mode de fonctionnement du dispositif de la figure 1,
la figure 3 est un schéma d'une réalisation d'un élément du dispositif de la figure 1,
les figures 4a, 4b et 4c sont des diagrammes illustrant le principe d'un second mode de fonctionnement du dispositif de la figure 1,
les figures 5a et 5b sont des diagrammes montrant de façon plus détaillée les modes de fonctionnement correspondant aux figures, respectivement 4a et 4b,
la figure 6 est un schéma analogue à celui de la figure 3, mais pour une variante,
les figures 7a et 7b sont des diagrammes montrant des indicateurs utilisant un codage par transition,
les figures 8 et 9 sont des diagrammes illustrant un mode de fonctionnement du dispositif de la figure 1 équipé de l'élément représenté sur la figure 6 ou sur la figure 1 1,
la figure 10 est un schéma montrant un autre mode de réalisation du dispositif de la figure 1,
la figure 11 est un schéma analogue à celui des figures 3 et 6, mais encore pour une autre variante,
les figures 12a à 12g sont des diagrammes illustrant des modes de fonctionnement du dispositif de la figure 1 équipé de l'élément représenté sur la figure 11, et
la figure 13 est un schéma analogue à celui de la figure 11, mais pour une autre variante.

L'exemple de réalisation de l'invention que l'on va maintenant décrire en relation avec les figures se rapporte à un système de télécommunication dans lequel les signaux sont numériques et transportés par cellules ou paquets. Dans ce qui suit, on utilisera seulement l'expression "cellule".

Ces cellules passent par des mémoires tampons dans des noeuds de commutation d'un réseau. Lorsqu'elles sont stockées dans une mémoire tampon (non montrée), elles doivent en sortir selon un ordre, ou séquencement, pouvant dépendre, par exemple, de la nature de la communication, en particulier de son débit et de sa qualité de service. Ceci implique que, dans certains cas, on doive tenir compte des priorités relatives parmi les cellules à servir dans la mémoire tampon.

Il faut ainsi déterminer l'ordre dans lequel les cellules doivent être évacuées de la mémoire tampon et assurer que cette évacuation ou service soit effectuée au moment voulu, compte tenu du fait que des cellules pénètrent et sortent constamment, à fréquence élevée, de la mémoire tampon.

Cette détermination de l'ordre de service des cellules doit, en outre, s'effectuer en un temps compatible avec le débit et le délai requis pour chaque communication.

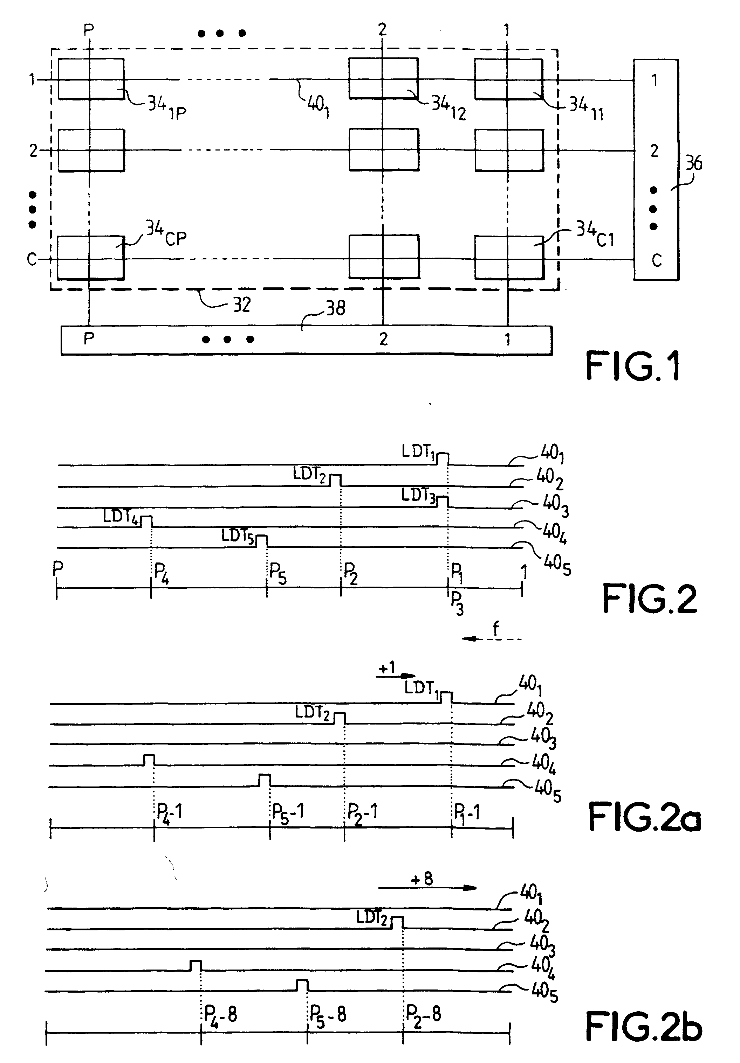

Pour atteindre ces objectifs, on prévoit (figure 1) un dispositif de commande 30 associé à une mémoire tampon. Ce dispositif comporte des mémoires contenant des indications sur les priorités temporelles des cellules et il permet, à chaque instant, de fournir à la mémoire tampon un signal de commande pour lui indiquer quelle(s) cellule(s) doit (doivent) être servie(s).

Ce dispositif 30 comporte un réseau matriciel 32 comprenant $CxP$ éléments $34_{11}$, $34_{12}$, ... $34_{CP}$. Chaque élément comporte au moins un point de mémoire permettant de marquer un indicateur de priorité. Les éléments sont disposés suivant C lignes numérotées de 1 à C, et P colonnes numérotées de 1 à P.

Chaque ligne correspond à une cellule dans la mémoire tampon ; cette dernière contient donc C cellules. A chaque cellule correspondent P positions temporelles (colonnes). Dans un exemple, on prévoit 128 lignes (cellules) et 256 colonnes (positions temporelles).

On notera ici que, dans le cas général, le nombre de positions temporelles n'est pas lié au nombre de cellules. Dans un dispositif d'ordonnancement, le nombre de positions temporelles dépend seulement de l'intervalle de temps durant lequel on désire effectuer l'ordonnancement des cellules.

Les positions temporelles sont représentées par des indices croissants de 1 à P de la droite vers la gauche, l'indice, ou rang, de numéro 1 correspondant au moment le plus proche du service.

Aux C lignes, est associé un sélecteur 36 de ligne(s) correspondant à des cellules à servir par le dispositif, qui, à chaque temps de service, tel qu'un signal d'horloge (si le service est périodique), détermine la (ou les) cellule(s) qui doit (doivent) être servie(s), compte tenu d'une première sélection temporelle préalablement effectuée grâce à un sélecteur 38 de position temporelle qui est associé aux diverses colonnes.

Un premier type d'indicateur de priorité temporelle associé à chaque élément $34_{ij}$ représente, pour la cellule concernée, la dernière position temporelle LDT ("Last Departure Time") pour laquelle la cellule doit être servie. Sa position temporelle est déterminée par une unité de gestion de la mémoire tampon extérieure au dispositif 30. Cette dernière position temporelle LDT, qui est comprise entre 1 et P, est, dans l'exemple, fonction, d'une part, de l'instant d'arrivée de la cellule concernée dans la mémoire tampon et, d'autre part, de paramètres liés au type (ou classe) de cellules dont elle fait partie, ces paramètres conduisant à un délai d'attente admissible plus ou moins important pour chaque cellule. Dans chaque ligne du réseau 32, il n'y a qu'un seul indicateur LDT.

Les sélecteurs 38 et 36 commandent la sélection à partir de ces indicateurs, comme expliqué ci-après.

Sur la figure 2 on a représenté un exemple simplifié comportant cinq cellules représentées par des lignes $40_1$ à $40_5$. Sur chaque ligne, l'indicateur $LDT_j$ est représenté par un créneau de taille égale à un intervalle de temps correspondant à une position temporelle notée $P_i$, i étant le numéro de la ligne correspondante.

Le sélecteur 38 explore les indicateurs LDT à partir de la position temporelle 1 la plus faible dans le sens de la flèche f, c'est-à-dire vers les positions temporelles les plus élevées. La (ou les) cellule(s) qui sera (seront) sélectionnée(s) pour service est (sont) celle(s) pour laquelle (lesquelles) la position temporelle de l'indicateur LDT est de rang le plus faible. Dans l'exemple, on voit que le rang le plus faible est le rang de la position temporelle $P_1$, $P_3$ pour laquelle les première et troisième lignes sont marquées par un indicateur de priorité à ce rang. Dans ce cas, selon le type de serveur considéré (plusieurs cellules ou une seule cellule à chaque temps de service), le sélecteur 36 sert simultanément ces deux cellules, ou bien une seule de ces deux cellules, le choix entre les deux lignes correspondantes marquées par des indicateurs de priorité à la même position temporelle pouvant s'effectuer de façon arbitraire.

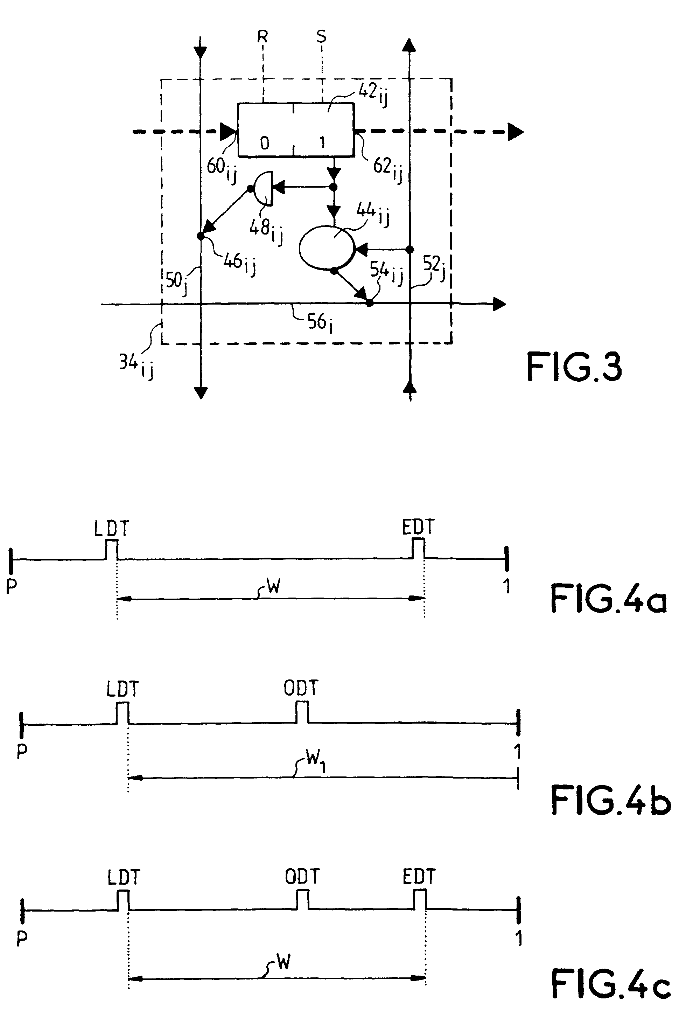

On va maintenant décrire en relation avec la figure 3 un mode de réalisation d'un élément $34_{ij}$ permettant d'utiliser un seul indicateur, par exemple de type LDT, par ligne correspondant à une cellule.

Cet élément comprend une mémoire $42_{ij}$ qui, dans l'exemple, est un simple point de mémoire, ou une bascule, mémorisant un état binaire 0 ou 1, l'état 1 représentant ici, par exemple, la présence d'un indicateur de priorité temporelle dans l'élément situé à la position j. La sortie "1" du point de mémoire $42_{ij}$ est reliée à la première entrée d'une porte ET $44_{ij}$, ainsi qu'à une entrée d'une porte de découplage $48_{ij}$ dont la sortie est reliée, par un OU câblé $46_{ij}$, au conducteur $50_j$, lequel est connecté à l'entrée de rang j du sélecteur temporel 38 (figure 1).

La seconde entrée de la porte ET $44_{ij}$ est reliée

à un conducteur $52_j$ connecté à la sortie de rang j du sélecteur 38.

La sortie de la porte ET $44_{ij}$ est reliée, par un OU câblé $54_{ij}$, à un conducteur $56_i$ relié à l'entrée de rang i du sélecteur de ligne 36.

Le point de mémoire $42_{ij}$ comporte aussi une entrée 60ij destinée à recevoir après chaque temps d'horloge, par exemple après chaque temps de service, si celui-ci est périodique, le signal provenant du point de mémoire de l'élément de la même ligne i, mais de position temporelle immédiatement supérieure, c'est-à-dire provenant du point de mémoire 42(i)(j+1). Ce point de mémoire $42_{ij}$ comprend aussi une sortie $62_{ij}$ destinée à transférer, également après chaque temps d'horloge, son contenu dans le point de mémoire de l'élément de la même ligne, mais de rang immédiatement inférieur, c'est-à-dire dans le point de mémoire de référence 42 (i)(j-1). Enfin, le point de mémoire $42_{ij}$ comporte des entrées R et S permettant de marquer un indicateur de priorité à la position temporelle requise lors de l'entrée de la cellule correspondante dans la mémoire tampon.

Le fonctionnement est le suivant :

Quand un "1" est marqué dans un point de mémoire $42_{ij}$, cette indication est transmise, par le OU câblé $46_{ij}$, sur le conducteur $50_i$, vers l'entrée de rang i du sélecteur 38 de position temporelle, pour lui signifier la présence d'au moins un indicateur de priorité (sur une ou plusieurs lignes) candidat pour sélection à cette position temporelle. Quand le sélecteur 38 a sélectionné, parmi les positions temporelles candidates pour sélection (caractérisées par la réception d'un signal actif en "1" sur leur entrée), celle de rang le plus faible, il active le conducteur $52_j$ correspondant à cette position temporelle sélectionnée pour signifier aux éléments de la colonne correspondante que cette position est sélectionnée. Dans un élément de cette colonne sélectionnée, le signal actif en "1 sur le conducteur $52_j$ permet de délivrer, du fait d'un signal "1" sur la première entrée de la porte $44_{ij}$ (lorsque l'élément a un indicateur de priorité marqué en "1" dans son point de mémoire $42_{ij}$), un signal "1" sur le conducteur $56_i$, un élément d'une colonne sélectionnée ne produisant pas de signal "1" sur le conducteur $56_i$ s'il n'a pas un indicateur de priorité marqué en "1" dans son point de mémoire.

Ce signal "1" est transmis au sélecteur 36 qui, comme indiqué ci-dessus, effectue le choix final entre les cellules correspondant aux lignes sélectionnées qui sont caractérisées par la réception d'un signal de valeur "1" sur leur ligne.

Enfin, le sélecteur 36 commande l'élimination de l'indicateur de priorité dans la ligne correspondant à chaque cellule qui vient d'être servie.

La remise à zéro d'une ligne est effectuée par un conducteur spécifique (non montré) pour chaque ligne.

Ensuite, un indicateur de priorité, correspondant à une nouvelle cellule qui vient d'être reçue dans la mémoire tampon, peut être inscrit dans la mémoire de l'un des éléments de la ligne correspondante.

Après chaque temps d'horloge (c'est-à-dire après chaque temps de service si celui-ci est périodique), le contenu de chaque point de mémoire $42_{ij}$ est transféré dans le point de mémoire $42_{i(j-1)}$ de l'élément $34_{i(j-1)}$ de position temporelle immédiatement inférieure. Bien entendu, le point de mémoire $42_{ij}$ reçoit alors par son entrée $60_{ij}$ le contenu du point de mémoire 42i(j+ 1).

En variante, au lieu d'effectuer un déplacement des contenus des points de mémoire, on modifie les rangs j dans le sélecteur 38, c'est-à-dire qu'on décale les indices 1 à P de la droite vers la gauche, le rang j devenant ainsi le rang j-1.

L'effet de ce décalage à chaque temps d'horloge est représenté sur la figure 2a où l'on voit qu'au temps d'horloge suivant, sur la ligne $40_1$ l'indicateur $LDT_1$ est maintenant situé à la position temporelle $P_j$-1, tandis que l'indicateur $LDT_3$ de la ligne $40_3$ a disparu, puisque la cellule correspondante vient d'être servie.

On voit aussi que les autres indicateurs de priorité se trouvent également à des positions temporelles de rang immédiatement inférieur par rapport aux positions précédentes représentées sur la figure 2.

Le diagramme de la figure 2b représente l'état des indicateurs des éléments après que la cellule correspondant à la ligne $40_1$ a été servie. On voit alors que l'indicateur $LDT_2$ de la ligne 2 occupe la position temporelle de rang le plus faible (ici la position temporelle $P_2$-8) et, ainsi, la cellule correspondant à cette seconde ligne sera sélectionnée pour être sortie de la mémoire tampon.

Dans le premier exemple décrit en relation avec la figure 3, on prévoit un seul indicateur de priorité temporelle pour chaque ligne. On va maintenant décrire plusieurs modes de réalisation dans lesquels on prévoit au moins deux indicateurs par ligne.

Ces indicateurs supplémentaires peuvent être de deux natures différentes, comme représenté sur les figures 4a, 4b et 4c.

Dans le diagramme de la figure 4a, on a représenté deux indicateurs, à savoir un indicateur LDT et un indicateur EDT.

L'indicateur LDT a la signification déjà décrite, à savoir la position la plus tardive pour laquelle la cellule correspondante doit être servie. L'indicateur EDT correspond à la position temporelle à partir de laquelle la cellule correspondante peut être servie au plus tôt ("Earliest Departure Time"). Ainsi, la cellule de la ligne correspondante ne peut être servie que dans un intervalle de temps W compris entre les positions EDT et LDT.

Dans le diagramme de la figure 4b, qui est analogue à celui de la figure 4a, on prévoit, en plus de l'indicateur LDT, un indicateur ODT qui est la position temporelle optimale de départ ou de service de la cellule ("Optimal Departure Time"). La cellule peut ainsi être distribuée dans un intervalle de temps $W_1$ compris entre 1 et LDT, mais de préférence au temps ODT, ou à proximité de cette position temporelle ODT. On peut noter que, dans ce cas, bien qu'il n'existe pas d'indicateur EDT, il est équivalent de considérer que cet indicateur EDT existe mais qu'il a passé la première position temporelle (numéro 1).

Le cas représenté sur le diagramme de la figure 4c correspond à l'utilisation de trois indicateurs LDT, ODT et EDT. Comme dans le premier cas (figure 4a), la cellule correspondante ne peut être servie qu'entre les positions EDT et LDT, c'est-à-dire dans l'intervalle de temps W ; mais une condition supplémentaire est imposée : la cellule sera servie de préférence dans la position ODT, ou dans la position la plus proche de cette position.

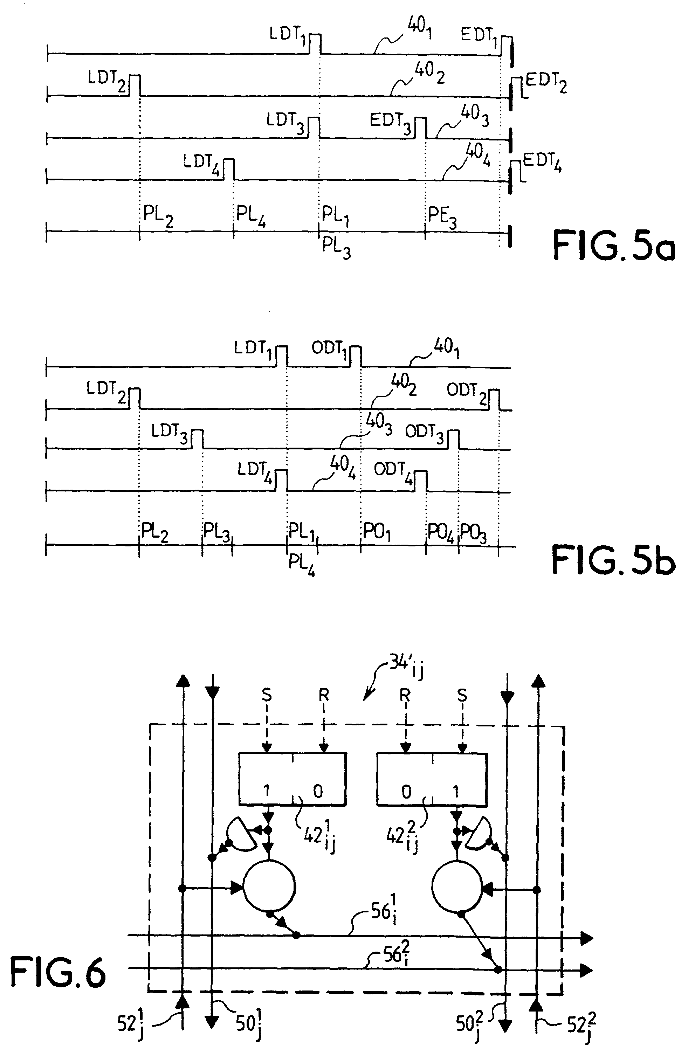

On a représenté sur la figure 5a un diagramme, présenté de façon analogue à celui de la figure 2 et correspondant au cas de la figure 4a, qui permet de comprendre l'ordre de service des cellules quand on prévoit, pour chaque cellule, deux indicateurs LDT et EDT. Cet exemple simplifié comporte quatre lignes $40_1$, $40_2$, $40_3$ et $40_4$ (correspondant donc à quatre cellules).

On voit qu'à un temps $t_0$ donné, la position temporelle des indicateurs $LDT_1$ et $LDT_3$ sur les lignes $40_1$ et $40_3$ est de rang le plus faible. Cependant, les cellules correspondantes ne peuvent pas être encore servies car leurs indicateurs EDT (respectivement $EDT_1$ et $EDT_3$) ne sont pas encore passés au-delà de la position temporelle 1. Par contre, les cellules correspondant aux lignes $40_2$ et $40_4$ peuvent être servies car leurs indicateurs EDT sont passés au-delà de la position 1. Dans ce cas, c'est la cellule correspondant à la ligne $40_4$ qui sera sélectionnée pour sortir de la mémoire tampon, car son indicateur $LDT_4$ se trouve à une position temporelle $PL_4$, qui est inférieure à la position temporelle $PL_2$ de la cellule correspondant à la ligne $40_2$.

Au temps de service suivant (non représenté), si aucune autre cellule n'est introduite, entre temps, dans le dispositif, la cellule correspondant à la première ligne $40_1$ pourra être sélectionnée pour sortir de la mémoire tampon, car son indicateur $EDT_1$ aura dépassé la position 1 et la position temporelle de son indicateur $LDT_1$ sera de rang le plus faible.

Le passage de chaque signal EDT à la position 1 est enregistré dans le sélecteur 36. A cet effet, dans ce dernier, pour chaque ligne, on prévoit une mémoire, ou registre, par exemple à un bit, qui note que l'indicateur EDT est passé, ou non, au-delà de la première position temporelle. Si la première position temporelle est dépassée, la cellule concernée peut participer à la sélection.

Le diagramme de la figure 5b correspond au cas représenté par la figure 4b : à chaque cellule, sont affectés deux indicateurs LDT et ODT.

Le sélecteur 38 présélectionne d'abord les lignes $40_1$ et $40_4$ pour lesquelles la position temporelle des indicateurs LDT est de rang le plus faible et, parmi ces deux lignes présélectionnées, il choisit ensuite la ligne $40_4$ pour laquelle la position temporelle de l'indicateur $ODT_4$ est le plus proche de la position 1. Ainsi, la cellule correspondant à la ligne $40_4$ pourra être servie.

On peut noter aussi sur la figure 5b que la cellule correspondant à la ligne $40_2$ présente un indicateur $ODT_2$ le plus proche de la position 1, mais que cette ligne n'est pas sélectionnée car la position temporelle de son indicateur $LDT_2$ n'est pas de rang le plus faible.

Dans le cas où l'on utilise les indicateurs ODT, il faut également garder en mémoire dans le sélecteur 36 leur passage éventuel au-delà de la première position temporelle jusqu'à ce que la cellule correspondante ait été servie. A cet effet, on prévoit, dans le sélecteur 36, une mémoire, par exemple à un bit dont la valeur, 0 ou 1, représente le fait que l'indicateur ODT est passé, ou non, au-delà de la position temporelle 1.

Il n'est pas indispensable de décrire un exemple de fonctionnement correspondant au cas représenté sur la figure 4c, car ce fonctionnement se déduit aisément de la combinaison des exemples décrits avec les figures 5a et 5b.

Pour réaliser un dispositif 30 permettant de servir des cellules dont chacune présente deux ou trois types différents d'indicateurs de priorité temporelle, on peut procéder de plusieurs manières.

Une première solution consiste à prévoir un nombre de réseaux 32 égal au nombre de types différents d'indicateurs de priorité.

Une deuxième solution consiste à prévoir un seul réseau 32, mais dans lequel chaque élément $34'_{ij}$ a une capacité de mémorisation correspondant au nombre d'indicateurs de priorité de types différents. Dans ce cas, la logique associée est différente de celle décrite en relation avec la figure 3.

Un exemple de réalisation d'élément $34'_{ij}$ correspondant à ce cas, avec deux types d'indicateurs, est représenté sur la figure 6. Cet élément comprend ainsi deux points de mémoire $42^1_{ij}$ et $42^2_{ij}$ et, à chacun de ces points ou registres, est associé un ensemble logique comprenant une porte ET et un OU câblé, comme dans le mode de réalisation représenté sur la figure 3. Dans ce cas, le sélecteur 38 (figure 1) comporte, pour chaque position temporelle, deux sorties et deux entrées et donc deux conducteurs $50^1_j$ et $50^2_j$ reliés aux deux entrées de rang i du sélecteur 38, et deux conducteurs $52^1_j$ et $52^2_j$ reliés aux deux sorties de rang i de ce sélecteur. On prévoit également deux conducteurs $56^1_i$ et $56^2_i$ reliés aux entrées doubles de rang i du sélecteur 36 de cellules.

Le point de mémoire $42^1_{ij}$ mémorise l'indicateur LDT, tandis que le point de mémoire $42^2_{ij}$ mémorise l'autre indicateur (EDT ou ODT). Dans les paires de bornes d'entrée et/ou de sortie des sélecteurs 36 et 38, un élément d'une paire correspond à un indicateur et l'autre élément de la paire correspond à l'autre indicateur.

Dans une troisième réalisation, qui sera préférée, on ne prévoit qu'un point de mémoire par élément $34_{ij}$ mais des moyens sont prévus pour reconnaître la nature des indicateurs sur une même ligne.

Ainsi, sur chaque ligne d'éléments, on marque un nombre d'éléments présentant un indicateur qui est égal au nombre d'indicateurs de types différents prévu par cellule. Autrement dit, tous les éléments sont identiques entre eux, et pris isolément, un élément marqué comme indicateur LDT ne se distingue pas d'un élément marqué comme indicateur EDT ou ODT.

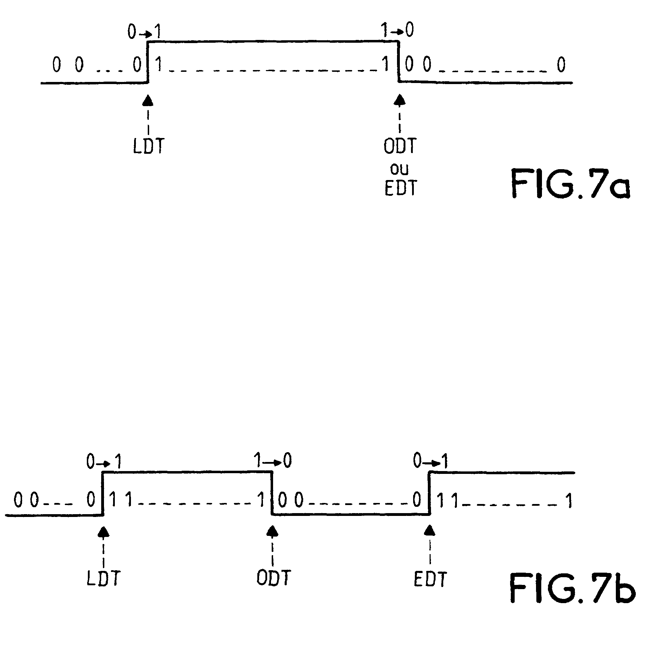

Pour déterminer la nature de l'indicateur marqué dans l'élément, une première solution consiste à coder la présence d'un indicateur par une transition plutôt que par la polarité d'un bit. Par exemple, quand on utilise deux indicateurs, la présence de l'un sera marquée par une transition 0->1 et celle de l'autre par une transition 1->0 (figure 7a). Quand on prévoit trois indicateurs, la présence du premier sera marquée par une transition 0->1, la présence du second par une transition 1->0 et la présence du troisième à nouveau par une transition 0->1. Ce dernier exemple est représenté sur la figure 7b.

Dans une seconde solution, la présence d'un indicateur est marquée par la polarité d'un bit et on distingue les indicateurs de types différents par leurs positions temporelles relatives sur une ligne.

Ainsi, l'indicateur LDT est reconnu par le fait que c'est l'indicateur qui, sur une ligne, a la position temporelle de rang le plus élevé. Pour détecter l'indicateur LDT, on peut effectuer une recherche par balayage d'une ligne en partant de la dernière position temporelle, celle de rang P, et en allant ensuite dans la direction décroissante de la gauche vers la droite.

L'indicateur EDT peut se reconnaître simplement par son passage à la position temporelle 1. En effet, il n'est pas nécessaire de détecter cet indicateur au préalable, car, s'il n'a pas passé la position 1, il est prématuré de servir la cellule associée à la ligne correspondante.

Pour déterminer la position des indicateurs ODT, on peut procéder comme suit : après avoir détecté la position de l'indicateur LDT par une recherche d'indicateur de gauche à droite restreinte aux cellules qui peuvent être servies, c'est-à-dire dont l'indicateur EDT a déjà passé au-delà de la position 1, et après avoir effectué une présélection de l'indicateur (ou des indicateurs) LDT de rang le plus faible, on peut effectuer, pour les lignes ainsi présélectionnées, une deuxième recherche d'indicateur ODT de la droite vers la gauche, de la position 1 vers les rangs temporels supérieurs. Il est à noter que cette recherche des positions des indicateurs ODT est nécessaire seulement pour les cellules présélectionnées lors de la première recherche, donc sur les lignes pour lesquelles les indicateurs LDT sont de rang temporel le plus faible. En variante, on peut effectuer une recherche d'indicateur(s) ODT de la gauche vers la droite à partir de chaque indicateur LDT présélectionné.

Pour ce mode de réalisation la structure générale du dispositif de commande 30 reste celle décrite en relation avec la figure 1. Le marquage des indicateurs LDT, EDT et ODT s'effectue sur la ligne $40_i$ correspondant à une cellule aux positions temporelles requises par l'unité de gestion mentionnée ci-dessus.

Comme expliqué plus haut, le sélecteur 36 mémorise, pour chaque ligne, une information représentant le passage de l'indicateur EDT, ou celui du passage des indicateurs EDT et ODT, au-delà de la première position temporelle 1.

Ainsi, dans le cas représenté sur la figure 4c, où trois indicateurs sont affectés à chaque ligne, à savoir les indicateurs LDT, EDT et ODT, on prévoit dans le sélecteur 36 un séquenceur à deux bits pour chaque ligne.

Un tel séquenceur permet de caractériser dans lequel des quatre états suivants se trouve chaque ligne :

État 1 : l'indicateur EDT n'est pas encore passé au-delà de la position temporelle 1.

État 2 : l'indicateur EDT est passé au-delà de la position temporelle 1 (provoquant un changement de l'état 1 à l'état 2), mais il n'en est pas de même pour l'indicateur ODT.

État 3 : l'indicateur ODT est également passé au-delà de la position 1 (provoquant un changement de l'état 2 à l'état 3).

État 4 : il n'y a pas de cellule active sur cette ligne.

Ainsi, la recherche d'indicateurs LDT puis ODT décrite ci-dessus n'est effectuée que sur les lignes en état 2 ou 3, puisque la recherche est prématurée pour les lignes en état 1 et non requise sur les lignes en état 4.

L'état 4 (où une ligne ne correspond pas à une cellule active) peut être également utilisé avantageusement pour les deux fonctions suivantes :

- La première fonction consiste à éviter d'effacer le contenu des éléments d'une ligne dont la cellule vient d'être servie. En effet, au lieu de commander la suppression des indicateurs de cette ligne dans le dispositif, il suffit de positionner le séquenceur de la ligne correspondante dans l'état 4 dans le sélecteur 36. On évite ainsi un temps d'occupation du dispositif pour effectuer l'effacement du contenu de la ligne, et le dispositif peut donc fonctionner plus rapidement. Ensuite, lors du marquage des indicateurs de priorité pour une nouvelle cellule dans une ligne en l'état 4, tous les éléments de cette ligne sont repositionnés, avec la polarité "active" pour les éléments marqués avec un indicateur, et avec la polarité opposée pour tous les autres éléments.

- La deuxième fonction consiste à éliminer de façon simple une cellule dans le dispositif sans interrompre son fonctionnement. Il suffit également de positionner le séquenceur de la ligne correspondante dans l'état 4 dans le sélecteur 36. Il est à noter que si, jusqu'à présent, on a supposé que chaque cellule devait être normalement servie pour sortir de la mémoire tampon, l'unité de gestion peut aussi décider d'éliminer prématurément une cellule dans le dispositif, par exemple pour régler un problème de congestion.

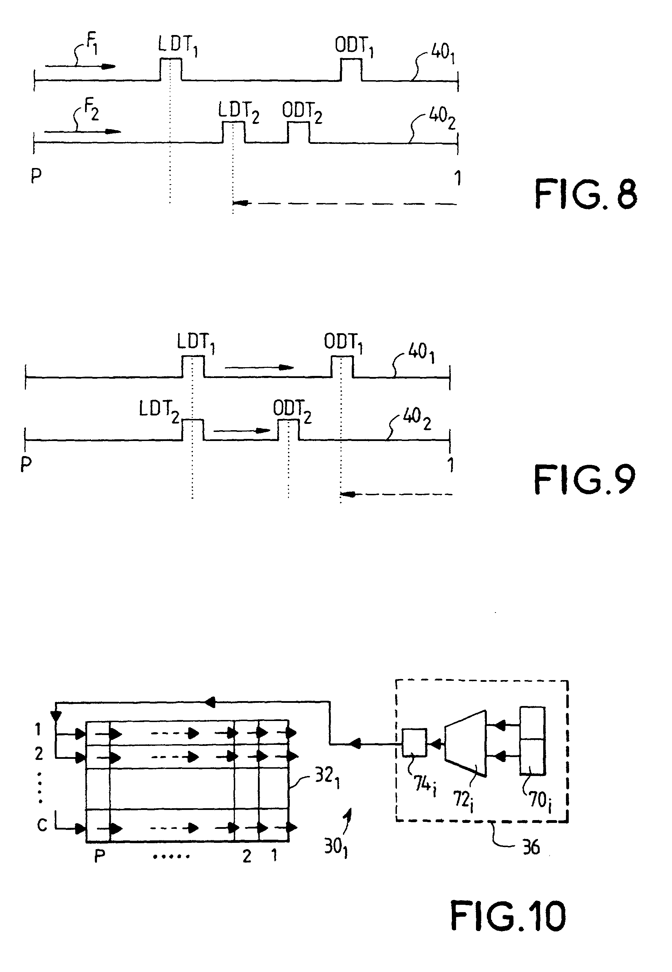

On va maintenant décrire à l'aide des diagrammes des figures 8 et 9, une opération de sélection de cellules dans le cas où l'on prévoit deux indicateurs LDT et ODT pour chaque cellule.

La figure 8 illustre le principe de la première recherche d'indicateurs LDT sur une ligne $40_1$ correspondant à une première cellule et sur une autre ligne $40_2$ correspondant à une seconde cellule.

Dans cette première phase de recherche, pour chaque ligne en l'état 2 ou 3, on effectue une recherche du premier indicateur, donc de l'indicateur LDT, de la gauche vers la droite, c'est-à-dire de la position temporelle P vers la position temporelle 1, comme représenté par les flèches $f_1$ et $f_2$ sur la figure 8. Au cours de cette recherche, le premier indicateur rencontré sur chaque ligne active est obligatoirement un indicateur LDT. Dans cet exemple, on voit que c'est l'indicateur $LDT_2$ de la ligne $40_2$ qui se trouve le plus proche de la position 1 et qui sera donc présélectionné par le sélecteur 38.

Mais il peut se produire que plusieurs lignes présentent un indicateur LDT à la même position temporelle et que celle-ci soit présélectionnée. Un tel cas est illustré sur le diagramme de la figure 9 où l'on voit que les lignes $40_1$ et $40_2$ présentent alors des indicateurs $LDT_1$ et $LDT_2$ à la même position temporelle supposée présélectionnée. Aussi, le processus de recherche se poursuit sur les lignes présélectionnées lors de la première phase de recherche. Cette deuxième phase de recherche s'effectue toujours de la gauche vers la droite, c'est-à-dire vers les positions temporelles inférieures, à partir de la position temporelle LDT présélectionnée, de façon à rechercher les indicateurs ODT. Ce sera alors la (ou les) cellule(s) dont l'indicateur ODT se trouve le plus proche de la position 1 qui sera (seront) sélectionnée(s). Dans l'exemple de la figure 9, c'est l'indicateur $ODT_1$ qui se trouve dans cette situation. Enfin, le signal de recherche se propage sur la ligne $40_1$ correspondant à la cellule sélectionnée jusqu'au sélecteur 36 pour lui indiquer la sélection de la cellule correspondant à cette ligne.

Dans l'exemple illustré par la figure 9, les deux lignes $40_1$ et $40_2$ sont en l'état 2 (puisque leur indicateur ODT n'est pas passé au-delà de la position 1). Il est également possible qu'une ou plusieurs lignes présélectionnées soient en l'état 3, c'est-à-dire que leur indicateur ODT est déjà passé au-delà de la position 1. Pour de telles lignes présélectionnées lors de la première phase de recherche, le signal de recherche se propage directement depuis la position LDT présélectionnée jusqu'au sélecteur 36 pour lui indiquer la sélection de la cellule correspondant à cette ligne. Comme expliqué plus haut, le sélecteur 36 choisit alors en priorité, parmi toutes les lignes sélectionnées par la réception du signal de recherche, celles qui sont dans l'état 3.

La figure 10 représente, de façon schématique, un dispositif $30_1$ pour effectuer les opérations de recherche permettant de sélectionner les cellules à servir, dans lequel chacun des éléments du réseau $32_1$ enregistre un seul indicateur temporel, plusieurs indicateurs de types différents étant cependant affectés à chaque ligne correspondant à une cellule.

Ce dispositif $30_1$ présente la même structure matricielle que celui représenté sur la figure 1. On a donc représenté seulement les parties du dispositif $30_1$ qui le distinguent du dispositif 30.

Dans le sélecteur 36 de cellules on prévoit, pour chaque ligne de rang i, une mémoire $70_i$ à deux bits, un décodeur $72_i$ dont la sortie est reliée, par l'intermédiaire d'un inverseur $74_i$, à une entrée de l'élément de dernier rang (P) de la ligne i concernée.

Les deux bits de la mémoire 70 affectée à la ligne i représentent les quatre valeurs d'états possibles mentionnés plus haut, à savoir :

- État 1 : l'indicateur EDT n'est pas encore passé au-delà de la position temporelle 1 ;
- État 2 : l'indicateur EDT est passé au-delà de la position 1, mais il n'en est pas de même pour l'indicateur ODT;
- État 3 : les indicateurs EDT et ODT sont tous deux passés au-delà de la position temporelle 1 ;
- État 4 : il n'y a pas de cellule active correspondant à cette ligne.

Pour chaque ligne, le décodeur 72, fournit sur sa sortie, dans l'exemple, un signal de valeur "1" signifiant que la recherche d'indicateurs est autorisée pour la cellule correspondant à cette ligne si le code à deux bits de la mémoire $70_i$ correspond à l'état 2 ou à l'état 3, c'est-à-dire qu'il y a une cellule active sur cette ligne et qu'au moins son indicateur EDT (ainsi qu'éventuellement son indicateur ODT) est passé au-delà de la position 1.

Dans ces conditions, un signal de valeur "0" apparaît sur la sortie de l'inverseur $74_i$ lorsque le sélecteur 36 produit un signal de recherche actif sur une ligne i, et ce signal est appliqué à l'entrée de l'élément de rang P de la ligne i.

Comme on le verra plus loin, en variante, on peut aussi utiliser un signal de recherche actif de valeur "1" ; toutefois, un signal de recherche actif de valeur "0" peut permettre une réalisation plus simple des éléments du réseau 32, de la figure 10.

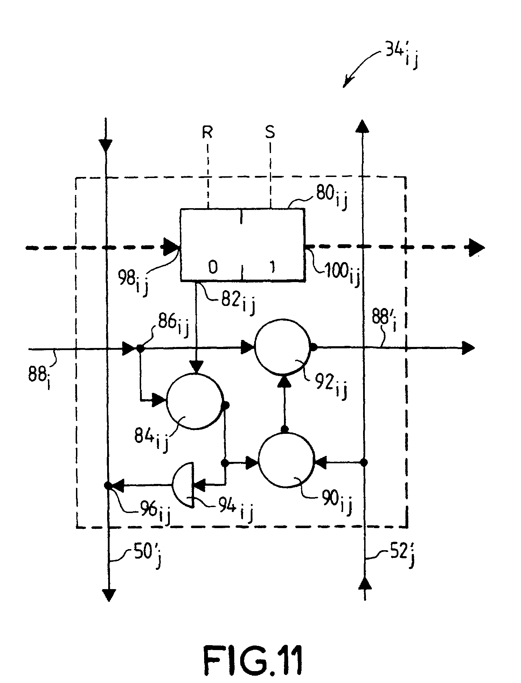

On a représenté sur la figure 11, un élément $34_{ij}$ faisant partie du réseau $32_1$ du dispositif $30_1$ de la figure 10.

Cet élément $34_{ij}$ comporte un point de mémoire $80_{ij}$ permettant de marquer la présence d'un indicateur, à savoir LDT, EDT ou ODT. Dans cette première réalisation , la présence d'un tel indicateur se manifeste par une sortie "0" du point de mémoire $80_{ij}$. Cette sortie $82_{ij}$ d'indicateur actif est connectée à une première entrée d'une porte NON-OU $84_{ij}$ dont la seconde entrée

est connectée, en $86_{ij}$, à un conducteur $88_i$ délivrant un signal de recherche d'indicateur en provenance de l'élément de rang supérieur.

La sortie de la porte NON-OU $84_{ij}$ est connectée au conducteur $50'_j$ (analogue au conducteur $50_j$ de la figure 3) par l'intermédiaire d'une porte $94_{ij}$ de découplage et d'un OU câblé $96_{ij}$.

La sortie de la porte NON-OU $84_{ij}$ est également reliée à la première entrée d'une porte ET $90_{ij}$ dont la seconde entrée est reliée au conducteur $52'_i$ dont le rôle est semblable à celui du conducteur $52_j$ décrit en relation avec la figure 3, sauf que le signal sur le conducteur $52'_i$ provenant du sélecteur 38 est, dans cette réalisation, actif en "0" pour signifier que le sélecteur 38 sélectionne cette position temporelle comme celle de rang le plus faible (donc que la position temporelle n'est pas retenue lorsqu'il transmet un signal de valeur "1" sur le conducteur $52'_i$).

La sortie de la porte ET $90_{ij}$ est reliée à une entrée d'une porte OU $92_{ij}$ présentant une autre entrée connectée au conducteur $88_i$ permettant de recevoir le signal de recherche en provenance de l'élément de rang supérieur. La sortie de la porte OU $92_{ij}$ est reliée à un conducteur $88'_i$ permettant de transmettre le signal de recherche à l'élément de rang inférieur.

Par ailleurs, le point de mémoire $80'_{ij}$ comporte une entrée de transfert $98_{ij}$ pour recevoir, à chaque temps d'horloge (soit à la fin de chaque temps de service dans le cas où le service est périodique à chaque temps d'horloge), le contenu de la mémoire de l'élément de la même ligne et de rang supérieur, ainsi qu'une sortie $100_{ij}$ destinée à transférer son contenu vers la mémoire de l'élément de rang inférieur de la même ligne i. On prévoit également des entrées R et S permettant de marquer chaque point de mémoire en "1" ou en "0".

Le fonctionnement est le suivant :

Pour sélectionner une (ou plusieurs) cellule(s) à servir dans la mémoire tampon, la première phase de recherche d'indicateurs dans le dispositif consiste à rechercher, parmi l'ensemble des lignes correspondant à une cellule active et dont au moins l'indicateur EDT est passé au-delà de la position 1 (donc parmi les lignes en l'état 2 ou 3), un indicateur LDT ayant la position temporelle la plus faible.

A cet effet, on effectue une recherche du type de celle décrite en relation avec la figure 8 (flèches $f_1$ et $f_2$) de la gauche vers la droite, c'est-à-dire de la position temporelle P vers la position temporelle 1 (dans le sens des indices j décroissants) au moyen du signal de recherche actif en "0" fourni par le sélecteur 36 à la sortie de l'inverseur $74_i$ de chaque ligne en l'état 2 ou 3 (figure 10). Chaque signal de recherche tente de se propager de proche en proche à travers les éléments successifs d'une ligne. Au niveau d'un élément individuel, un signal de recherche est éventuellement reçu de l'élément de rang supérieur sur l'entrée $88_i$ et éventuellement transmis à l'élément de rang inférieur sur la sortie $88_i$ (figure 11).

Dans chaque élément $34'_{ij}$ du réseau $32_1$, quand un indicateur "0" est présent dans le point de mémoire $80_{ij}$ et quand, simultanément, un signal de recherche actif en "0" est reçu par l'élément sur l'entrée $88_i$, le signal de sortie de la porte NON-OU $84_{ij}$ est au niveau "1" signifiant qu'un indicateur est détecté comme candidat pour sélection.

Ce signal "1" sur la sortie de la porte $84ij$ est transmis au conducteur $50'_i$ et donc à l'entrée correspondante du sélecteur 38 de position temporelle pour lui indiquer qu'au moins un indicateur candidat pour sélection a été détecté à la position temporelle correspondant au rang de cet élément. Dans les autres cas, c'est-à-dire quand l'élément ne reçoit pas de signal de recherche actif en "0" sur l'entrée $88_i$, ou bien quand il n'y a pas d'indicateur marqué en "0" dans sa mémoire $80_{ij}$, la sortie de la porte $84_{ij}$ est à "0" ; un tel élément n'est donc alors pas candidat pour sélection. Par ailleurs, on notera que, quand un élément n'a pas d'indicateur marqué en "0" dans sa mémoire $80_{ij}$, la sortie de la porte $84_{ij}$ est à "0" ; ainsi, quelle que soit la polarité, "0" ou "1", du signal de recherche reçu sur l'entrée $88_i$, l'état du signal de recherche est alors transmis, de façon transparente, avec la même polarité à travers la porte OU $92_{ij}$ sur la sortie $88_i$ vers l'élément suivant.

Au cours de la première phase de recherche de l'indicateur LDT à sélectionner, le sélecteur 38 applique d'abord un signal de niveau "1" sur tous les conducteurs $52'_i$ (signifiant position temporelle non retenue) afin d'empêcher la propagation de tout signal de recherche actif au-delà du premier élément pour lequel on détecte la présence d'un indicateur. En effet, dans un tel élément, la sortie de la porte ET $90_{ij}$ est à "1" parce qu'un signal de niveau "1" est reçu sur les conducteurs $52'_i$ et $88_i$, ce qui entraîne un signal à "1" (recherche inactive), produit par la porte OU $92_{ij}$, sur la sortie $88'_i$ vers l'élément suivant.

Une fois stabilisée la propagation des signaux de recherche à travers les éléments de toutes les lignes en l'état 2 ou 3, le sélecteur 38 effectue une recherche sur ses entrées (reliées aux conducteurs $50'_i$), parmi l'ensemble des positions temporelles, pour identifier celle pour laquelle l'entrée est à "1" (dénotant la présence, dans cette colonne, d'au moins un élément présentant un indicateur LDT, donc candidat pour sélection) et pour, alors, déterminer le rang j de la position temporelle candidate pour sélection LDT de rang le plus faible.

La seconde phase de recherche d'indicateurs consiste, ensuite, à déterminer la position des indicateurs ODT pour les lignes présélectionnées au cours de la première phase de recherche d'indicateurs LDT. A cet effet, on poursuit la recherche en autorisant la propagation du signal de recherche actif en "0" sur chaque ligne au-delà de la position temporelle retenue. Au niveau d'un élément, pour permettre cette poursuite de recherche, à partir de la position temporelle j retenue, le sélecteur 38 délivre sur le conducteur $52'_j$ de cette seule position j présélectionnée, un signal de valeur "0" (dans cette réalisation) signifiant qu'il sélectionne cette position temporelle comme la position candidate pour sélection LDT ayant le rang le plus faible. Simultanément, le sélecteur 38 maintient un signal de valeur "1" sur le conducteur $52'_i$ de toutes les autres positions temporelles.

Dans chaque élément de cette colonne ayant détecté un indicateur (LDT) candidat pour sélection, ce signal de valeur "0" provoque le passage de "1" à "0" du signal sur la sortie de la porte OU $92_{ij}$, c'est-à-dire autorise alors la transmission d'un signal de recherche actif en "0" sur la sortie $88'_i$ de l'élément $34'_{ij}$ vers l'élément suivant.

Ensuite, la recherche des indicateurs ODT se poursuit, toujours de la gauche vers la droite, sur les lignes présélectionnées lors de la première phase, comme précédemment illustré sur la figure 9, par les flèches à partir de la position LDT sélectionnée. Cette recherche d'indicateurs ODT s'effectue de manière analogue à la première phase de recherche d'indicateurs LDT. Ainsi, comme au cours de la première phase, dans chaque élément ayant détecté un indicateur candidat pour sélection, le conducteur $50'_i$ activé à "1" applique sur l'entrée correspondante de rang j du sélecteur 38 un signal indiquant la présence, à cette position temporelle j, d'au moins un indicateur ODT candidat pour sélection.

Une fois stabilisée la propagation des signaux de recherche sur toutes les lignes présélectionnées, le sélecteur 38 effectue une recherche sur ses entrées pour déterminer la position temporelle présentant (au moins) un indicateur ODT candidat pour sélection dont le rang est le plus proche de la position temporelle 1.

Après avoir effectué cette sélection, comme lors de la première phase, le sélecteur 38 délivre, sur le conducteur $52'_i$ de cette seule position j présélectionnée, un signal de valeur "0" signifiant qu'il sélectionne cette position temporelle comme la position candidate pour sélection ODT ayant le rang le plus faible. Dans chaque élément de cette colonne ayant détecté un indicateur (ODT) candidat pour sélection, ce signal de valeur "0" provoque le passage de "1" à "0" du signal sur la sortie de la porte OU $92_{ij}$, c'est-à-dire autorise alors la transmission d'un signal de recherche actif en "0" sur la sortie 88; de l'élément $34'_{ij}$, et le signal de recherche actif en "0" transmis peut alors se propager sur la ligne sélectionnée à travers les éléments suivants jusqu'au sélecteur 36.

Si, au cours de la première phase de recherche (recherche des indicateurs LDT), l'indicateur ODT d'une ligne présélectionnée est déjà passé au-delà de la position temporelle 1 (c'est le cas d'une ligne en l'état 3 dont la situation est déjà enregistrée dans la mémoire correspondante $70_i$ du sélecteur 36), le signal de recherche pour une telle ligne atteindra directement ce sélecteur 36 dès le début de la deuxième phase de recherche d'indicateur ODT. Par contre, pour les autres lignes présélectionnées qui sont en l'état 2 (l'indicateur ODT n'a pas dépassé la position 1), on rappelle ici que le signal de recherche n'arrive au sélecteur 36 que si son indicateur ODT se trouve à la position temporelle de rang le plus faible.

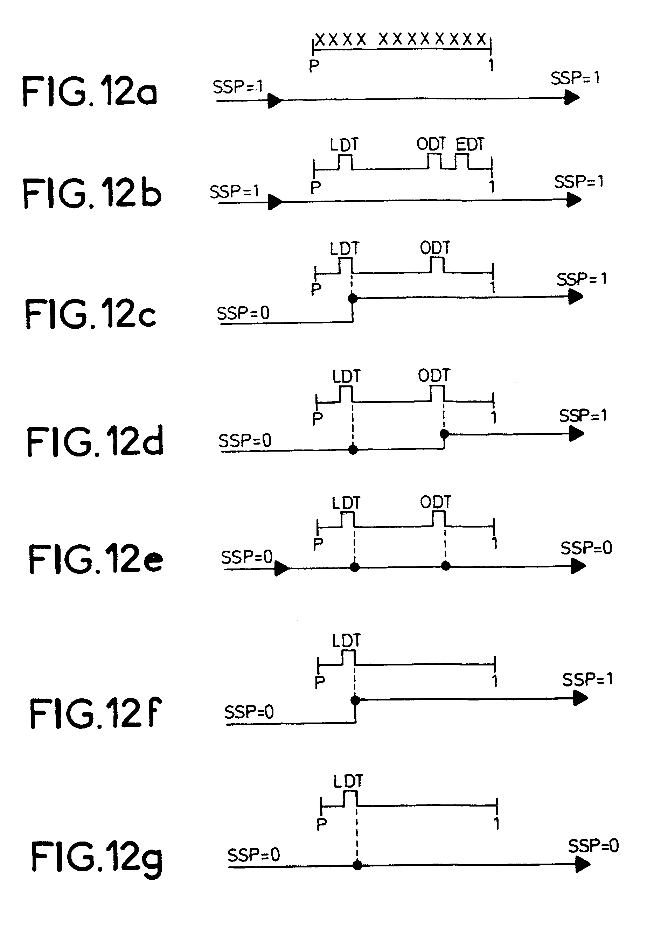

Les diverses situations pouvant se présenter au cours de l'opération de recherche sont illustrées sur les diagrammes des figures 12a à 12g.

Sur ces diagrammes, le signal de recherche a été noté SSP. Une opération de recherche active sur une ligne correspond à SSP=0, et le signal SSP=1 signifie qu'une recherche n'est pas effectuée sur la ligne correspondante.

La figure 12a illustre le cas d'une ligne en l'état 4 correspondant à aucune cellule active dans le dispositif, c'est-à-dire tel qu'aucun signal de recherche SSP n'est activé pour cette ligne et qu'aucun passage d'indicateur au-delà de la position 1 n'est indûment détecté quel que soit le contenu (quelconque) des points de mémoire des éléments de cette ligne.

Dans la situation représentée sur la figure 12b, l'indicateur EDT de la ligne n'ayant pas encore dépassé la position 1, aucun signal de recherche n'est donc émis (SSP=1); c'est le cas d'une ligne en l'état 1.

Le cas de la figure 12c, pour laquelle l'indicateur EDT a déjà dépassé la position 1, correspond à une ligne en l'état 2. Un signal de recherche actif (SSP=0) est donc émis sur la ligne. Cependant, on suppose ici que la ligne n'est pas sélectionnée car son indicateur LDT n'est pas celui qui a la position temporelle la plus proche de 1.

Alors, le signal de recherche SSP est forcé à "1" dans l'élément marqué par l'indicateur LDT non présélectionné (arrêt de la recherche en aval).

Le cas de la figure 12d correspond également à celui d'une ligne en l'état 2, mais on suppose maintenant que son indicateur LDT est présélectionné car il présente la position temporelle la plus faible parmi les indicateurs de ce type. Toutefois, on suppose ici que la ligne n'est pas sélectionnée lors de la recherche d'indicateurs ODT (une autre ligne étant sélectionnée parce que l'indicateur ODT de cette autre ligne a une position temporelle plus proche de 1).

Dans le cas représenté sur la figure 12e, la ligne, également en l'état 2, est sélectionnée, son indicateur LDT ayant la position temporelle de rang le plus faible et, de même, parmi les lignes présélectionnées, son indicateur ODT a la position la plus proche de 1.

Dans le cas de la figure 12f, la ligne est maintenant en l'état 3 (son indicateur ODT indicateur a passé la position 1) et on suppose ici que la ligne n'est pas présélectionnée car la position temporelle de son indicateur LDT n'est pas celle de rang le plus faible.

Enfin, la situation représentée sur la figure 12g est analogue à celle du diagramme de la figure 12f (ligne en l'état 3), mais on suppose maintenant que la ligne est sélectionnée, car la position temporelle de son indicateur LDT se trouve être de rang le plus faible, donc présélectionnée lors de la première phase de recherche d'indicateurs LDT par les moyens 38.

Si, à la fin du processus de sélection dans le réseau par le sélecteur 38, plusieurs lignes sont sélectionnées et si une seule cellule doit être traitée à la fois, le sélecteur 36 choisit en priorité une cellule correspondant à une ligne sélectionnée dont l'indicateur ODT a passé la position 1 (donc en l'état 3).

S'il y a plusieurs lignes sélectionnées en l'état 3, le choix parmi celles-ci sera par exemple arbitraire.

Si, parmi les lignes sélectionnées, aucune ne présente un indicateur ODT ayant passé la position 1 (toutes les lignes sélectionnées sont en l'état 2), alors le sélecteur 36 choisira aussi arbitrairement une cellule parmi ces lignes sélectionnées.

L'unité de gestion commande la sortie de la cellule sélectionnée de la mémoire tampon. En même temps, le sélecteur 36 peut commander l'effacement de tous les indicateurs (significatifs en valeur "0" dans cet exemple) dans les éléments de la ligne correspondante.

En variante, au lieu d'effectuer une action d'effacement des indicateurs dans les éléments de la ligne libérée, on positionne seulement la mémoire $70_i$ du sélecteur 36 (figure 10) dans l'état 4 de ligne correspondant à aucune cellule active dans le dispositif, c'est-à-dire tel qu'aucun signal de recherche SSP n'est émis et qu'aucun passage d'indicateur au-delà de la position 1 n'est indûment détecté quel que soit le contenu des points de mémoire des éléments de cette ligne. On rappelle ici que cette variante (sans effacement du contenu des éléments) présente l'avantage de réduire le temps de traitement nécessaire par temps de service, et donc d'augmenter la fréquence de fonctionnement du dispositif.

Dans ce cas, quand une nouvelle cellule est introduite dans le dispositif, on lui affecte une ligne préalablement inactive en l'état 4 et on positionne en parallèle les points de mémoire de tous les éléments de mémoire de cette ligne (de façon à introduire un "0" pour les positions temporelles marquées par un indicateur et un "1" pour toutes les autres positions temporelles) ; ainsi, pour tous les points de mémoire de la ligne, le contenu résiduel (qui n'a pas été effacé auparavant) est remplacé par un nouveau contenu.

Le forçage en l'état 4 de la mémoire $70_i$ d'une ligne dans le sélecteur 36 présente aussi un intérêt quand on veut effectuer une opération d'élimination prématurée d'une cellule dans le dispositif.

Pour cela, il suffit de positionner la mémoire $70_i$ dans l'état 4 de la ligne correspondant à la cellule à éliminer pour la rendre inactive dans le dispositif.

Ainsi, l'élimination prématurée d'une cellule (ou plus généralement d'un objet) dans ce dispositif constitue une opération particulièrement simple et rapide, puisqu'elle ne nécessite pas d'immobilisation temporaire du fonctionnement du dispositif.

Une telle élimination est utile, par exemple, quand on veut sortir de la mémoire tampon certaines cellules afin de libérer de la mémoire pour des cellules ayant une priorité plus importante, ou lorsqu'une cellule n'a pas été servie alors que son indicateur LDT a passé la position temporelle 1, ou encore lorsqu'une cellule est défectueuse.

Comme mentionné plus haut, en variante du dispositif qui vient d'être décrit en relation avec les figures 10, 11 et 12, on peut aussi utiliser un signal de recherche SSP actif de valeur "1". Un signal de recherche actif de valeur "0", correspondant à la réalisation décrite ci-dessus, peut cependant permettre une réalisation plus simple des éléments du réseau $32_1$ de la figure 10, tel qu'un élément $34_{ij}'$ de la figure 11.

Dans une telle variante, le fonctionnement de principe reste le même. Les différences de réalisation sont les suivantes :

Par rapport à la figure 10, dans le sélecteur 36, le signal de valeur "1" à la sortie du décodeur $72_i$ (signifiant que la recherche d'indicateurs est autorisée pour la cellule correspondant à cette ligne si le code à deux bits de la mémoire $70_i$ correspond à l'état 2 ou bien l'état 3) constitue directement le signal de recherche SSP qui doit être maintenant actif en "1". L'inverseur $74_i$ est donc supprimé dans ce cas.

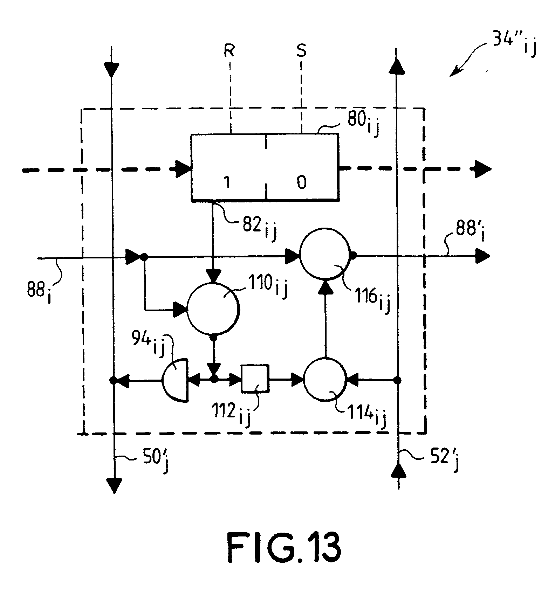

La figure 13 illustre la réalisation de principe d'un élément $34_{ij}''$ pour un signal de recherche actif SSP=1., On rappelle ici que l'élément $34_{ij}'$ représenté sur la figure 11 correspond à un signal de recherche SSP=0.

Dans l'élément $34_{ij}''$, on prévoit, comme dans l'élément $34_{ij}'$ de la figure 11, un point de mémoire $80_{ij}$ ou registre. Cependant, dans ce point de mémoire, la présence d'un indicateur est marquée par une valeur "1", au lieu d'une valeur "0" pour l'élément $34_{ij}'$.

La sortie $82_{ij}$ du point de mémoire $80_{ij}$ est reliée à la première entrée d'une porte ET $110_{ij}$ dont la seconde entrée est reliée au conducteur d'entrée $88_i$.

La sortie de la porte ET $110_{ij}$ est reliée à l'entrée d'une porte de découplage $94_{ij}'$ dont la sortie est reliée au conducteur $50_i'$. Cette sortie de la porte ET $110_{ij}$ est aussi connectée à l'entrée d'un inverseur $112_{ij}$ dont la sortie est reliée à la première entrée d'une porte OU $114_{ij}$ dont la seconde entrée reçoit le signal du conducteur $52_j'$.

La sortie de la porte OU $114_{ij}$ est reliée à une entrée d'une porte ET $116_{ij}$ dont une seconde entrée est reliée à l'entrée $88_i$.

Enfin, la sortie de la porte ET $116_{ij}$ est reliée au conducteur de sortie $88_j'$.

Le fonctionnement est le suivant :

Le conducteur $52_i'$ provenant du sélecteur 38 est ici actif en "1" pour signifier que le sélecteur 38 sélectionne cette position temporelle comme celle de rang le plus faible, alors que, dans la description précédente, le conducteur homologue est actif en "0" dans la même situation.

La porte ET $116_{ij}$ autorise la transmission d'un signal de recherche actif SSP=1 si, simultanément, l'élément $34_{ij}''$ reçoit un signal SSP=1 sur l'entrée $88_i$, et soit sa position temporelle n'est pas sélectionnée par le sélecteur 38, soit l'élément n'est pas candidat pour sélection.

Par comparaison, on rappelle que dans l'exemple de réalisation de la figure 11, la porte OU $92_{ij}$ autorise la transmission d'un signal de recherche actif SSP=0 si, simultanément, l'élément reçoit un signal SSP=0, et soit l'élément n'est pas candidat pour sélection, soit sa position temporelle n'est pas sélectionnée par le sélecteur 38.

Par rapport à la description des diverses situations pouvant se présenter au cours de l'opération de recherche qui sont illustrées par les diagrammes des figures 12a à 12g, la seule différence est le remplacement de SSP=0 par SSP=1.

Il est à noter que le mode de réalisation que l'on vient de décrire, notamment en relation avec les figures 10 à 13, n'est pas limité à la possibilité d'utiliser trois indicateurs par cellule. On peut utiliser un nombre d'indicateurs supérieur à trois.

Dans les applications d'un dispositif d'ordonnancement décrites ci-dessus, l'ordre de service de la cellule à sortir de la mémoire tampon est décidé au temps de service même. Dans une application d'une file d'attente du type FIFO où l'ordre de service de la cellule est décidé dès son arrivée dans la mémoire tampon, le dispositif permet de sélectionner les cellules dans l'ordre où elles sont reçues.

A cet effet, il suffit de convenir que les P colonnes du réseau matriciel ne correspondent plus, dans ce cas, à des positions temporelles, mais simplement aux rangs des cellules dans la file d'attente FIFO.

Dans ce cas, il suffit d'un seul indicateur par cellule pour caractériser son rang par rapport aux autres cellules dans la file d'attente.

On utilise un pointeur désignant le rang de la dernière cellule placée dans une file d'attente pour déterminer le rang suivant affecté à une nouvelle cellule reçue. Il faut donc procéder à un décalage d'une position de rang inférieur à chaque temps de service effectif (pas obligatoirement à chaque temps d'horloge, sauf si les temps de service sont périodiques à chaque temps d'horloge).

En outre, on peut introduire une hiérarchie de priorités fixes entre différentes catégories de cellules, par exemple, entre une catégorie ayant une qualité de service garantie et une autre non. Dans un tel exemple simplifié, on ne sert les cellules de priorité inférieure que lorsque toutes les cellules de priorité supérieure auront été traitées.

Pour distinguer une telle priorité fixe entre cellules, on peut prévoir, dans le sélecteur 36, un bit de priorité pour chaque ligne. Ce bit de priorité est utilisé, dans le sélecteur 36, pour inhiber la génération d'un signal de recherche quand on a affaire à une cellule de priorité inférieure qui ne doit pas encore être traitée tant qu'il reste des cellules de priorité supérieure dans le dispositif. Un bit de priorité indiquant la présence une cellule de priorité inférieure sur une ligne peut aussi être utilisé pour empêcher le décalage de ses positions temporelles à chaque signal d'horloge. Ainsi, toutes les cellules de priorité inférieure restent programmées dans la même position temporelle tant que les cellules de priorité supérieure n'auront pas été toutes servies. Pour contrôler le traitement des cellules, on peut associer à la mémoire tampon, un compteur indiquant le nombre de cellules de priorité supérieure restant dans le dispositif, les cellules de priorité inférieure étant traitées seulement quand ce compteur atteint la valeur zéro.

## Revendications

1. Dispositif $(30, 30_1)$ pour déterminer l'ordre de service d'objets stockés temporairement dans une mémoire tampon, au moins un indicateur de priorité étant attaché à ces objets, comprenant :

   - un ensemble d'éléments $(34_{ij}$ ; $34_{ij}'$, $34_{ij}'')$ de mémorisation, comportant des mémoires vives $(42_{ij}$ ; $80_{ij})$ et disposés suivant un réseau matriciel (32) organisé en C sous-ensembles d'éléments, C étant le nombre d'objets qui peut être stockés temporairement, chacun de ces sous-ensembles correspondant à un objet et tous les sous-ensembles comprenant le même nombre P d'éléments correspondant à P positions temporelles, chaque élément comprenant une mémoire $(42_{ij}$ ; $80_{ij})$ susceptible de recevoir au moins un type d'indicateur (LDT, EDT, ODT) de priorité temporelle,
   - des moyens $(R, S, 60_{ij}, 62_{ij})$ pour inscrire, lors de la réception d'un nouvel objet, un indicateur de priorité temporelle dans l'élément de mémorisation correspondant à cet objet est à la position temporelle attribuée à cet objet,
   - et des moyens de sélection de première position temporelle (38) pour déterminer, dans le réseau, parmi tous les sous-ensembles, l'élément (ou les éléments) qui est (sont) marqué(s) par un indicateur de priorité temporelle de type déterminé (LDT) et qui correspond(ent) à la position temporelle ayant la plus petite valeur.

2. Dispositif selon la revendication 1, **caractérisé en ce qu'**il comprend, en outre, des moyens de sélection prioritaire d'objets (36) permettant de sélectionner au moins un des sous-ensembles parmi ceux qui ont été présélectionnés par les moyens de sélection de première position temporelle (38).

3. Dispositif selon la revendication 1 ou 2, **caractérisé en ce qu'**il comprend des moyens adaptés pour tenir compte de la progression du temps d'horloge, et des moyens pour introduire à chaque temps d'horloge, un décalage d'une position temporelle entre les indicateurs de priorité temporelle de chaque sous-ensemble et le rang correspondant à leur position temporelle, de telle sorte que leur nouveau rang corresponde à la position temporelle adjacente inférieure.

4. Dispositif selon la revendication 3, **caractérisé en ce que** les moyens adaptés pour introduire, a chaque temps d'horloge un décalage sont adaptés pour effectuer le décalage d'une position temporelle est effectué en transférant le contenu de la mémoire de chaque élément vers l'élément voisin correspondant à la position temporelle adjacente inférieure.

5. Dispositif selon la revendication 2, **caractérisé en ce que** les moyens de sélection prioritaire d'objet (36)

   sont connectés aux éléments de mémorisation par l'intermédiaire d'une ligne entrante par sous-ensemble, cette ligne étant adapté pour transmettre un signal d'objet sélectionné, et

   sont adaptés pour effectuer le choix final d'au moins un objet devant être servi parmi les objets correspondant aux sous-ensembles transmettant un signal d'objet sélectionné.

6. Dispositif selon l'une quelconque des revendications 1 à 5, **caractérisé en ce que** les moyens de sélection de première position temporelle (38) sont connectés aux éléments de mémorisation par l'intermédiaire de deux lignes communes pour chacune des P positions temporelles, à savoir :

   - une ligne commune entrante $(50_i ; 50'_j ; 50'_j, 50^2_j)$ adapté pour recevoir un signal de position temporelle candidate pour sélection,
   - et une ligne commune sortante $(52_i ; 52'_j ; 52^1_j, 52^2_j)$ adapté pour transmettre un signal de position temporelle retenue ;

   et **en ce que** les moyens de sélection de première position temporelle (38) sont adaptés, d'une part, pour identifier, parmi les P signaux reçus sur les lignes communes entrantes, le premier signal de position temporelle candidate pour sélection correspondant à la position temporelle ayant la plus petite valeur, et, d'autre part, pour indiquer cette première position temporelle sélectionnée en transmettant un signal de position temporelle retenue sur la ligne commune sortante correspondant à la première position temporelle sélectionnée.

7. Dispositif selon l'une quelconque des revendications précédentes, **caractérisé en ce que**, pour chaque sous-ensemble, la position temporelle de l'élément dans lequel se trouve un indicateur de priorité temporelle représente le moment souhaité pour effectuer le service de l'objet correspondant à ce sous-ensemble par rapport aux autres objets, les moyens de sélection de première position temporelle (38) étant adaptés pour sélectionner en priorité l'objet (ou les objets) dont l'indicateur de priorité est situé dans un élément correspondant à la position temporelle de plus petite valeur.

8. Dispositif selon les revendications 5, 6 ou 7, **caractérisé en ce que** chaque élément de mémorisation :

   - est adapté pour activer la ligne commune entrante correspondante des moyens de sélection de première position temporelle (38) pour transmettre, à ces derniers, un signal de position temporelle candidate pour sélection si ledit indicateur de priorité temporelle est marqué dans sa mémoire ;
   - est adapté pour recevoir des moyens de sélection de première position temporelle (38), sur une ligne commune sortante par position temporelle, un signal de position temporelle retenue lorsque ces moyens de sélection de première position temporelle (38) indiquent que la position temporelle de cet élément a été sélectionnée ; et
   - est adapté pour engendrer, sur une ligne commune par sous-ensemble, un signal d'objet sélectionné destiné aux moyens de sélection prioritaire d'objet (36), lorsque simultanément :

     - l'indicateur de priorité temporelle est marqué dans sa mémoire,
     - et le signal de position temporelle retenue est reçu de la ligne commune sortante des moyens de sélection de première position temporelle.

9. Dispositif selon la revendication 7, **caractérisé en ce que**, pour chaque sous-ensemble, un indicateur de priorité temporelle (LDT) représente le dernier moment souhaité pour effectuer le service de l'objet.

10. Dispositif selon la revendication 9, **caractérisé en ce que**, à chaque sous-ensemble, est également attaché au moins l'un et/ou l'autre des deux indicateurs de priorité supplémentaires suivants :

    un indicateur de position temporelle de sélection autorisée au plus tôt (EDT) avant laquelle l'objet ne peut être servi, cet indicateur ayant une position temporelle de plus petite valeur que celle de l'indicateur (LDT) représentant le dernier moment souhaité pour effectuer le service, et
    un indicateur de position temporelle de sélection optimale (ODT) pour effectuer le service, la position temporelle de cet indicateur ayant une valeur inférieure à celle de l'indicateur de dernier moment souhaité pour effectuer le service,

et **en ce que**, lorsque ces deux indicateurs de priorité supplémentaires sont présents simultanément, l'indicateur de position temporelle de sélection optimale (ODT) présente une valeur qui est supérieure à celle de l'indicateur de sélection autorisée au plus tôt (EDT) avant lequel l'objet ne peut être servi.

11. Dispositif selon l'une quelconque des revendications précédentes, **caractérisé en ce que** plusieurs indicateurs de priorité temporelle de types différents (LDT, ODT, EDT) étant attachés à chaque sous-ensemble, le dispositif comporte un nombre de réseaux d'éléments indicateurs égal au nombre de types d'indicateurs.

12. Dispositif selon l'une quelconque des revendications précédentes, **caractérisé en ce que**, plusieurs indicateurs de types différents (LDT, ODT, EDT) étant affectés à chaque sous-ensemble, chaque élément comporte un nombre de points de mémoires ($42_j^1$ ; $42_j^2$) au moins égal au nombre de types d'indicateurs, chaque point de mémoire étant affecté à un indicateur de type déterminé.

13. Dispositif selon la revendication 10, **caractérisé en ce qu'**il comporte des moyens de recherche des indicateurs adaptés pour rechercher au cours d'une première phase, dans chaque sous-ensemble, le premier indicateur de priorité temporelle qui présente, parmi tous les indicateurs du sous-ensemble, la position temporelle de valeur la plus élevée, et effectuer, après avoir présélectionné les sous-ensembles qui présentent ce premier indicateur à la position temporelle la plus faible, au cours d'une seconde phase, la recherche des indicateurs suivants de position temporelle inférieure dans les sous-ensembles présélectionnés, et sélectionner les sous-ensembles qui présentent un indicateur suivant à la position temporelle la plus faible.

14. Dispositif selon la revendication 13, **caractérisé en ce que** :

   - chaque élément est adapté pour mémoriser un seul indicateur de priorité,
   - un indicateur de dernier moment (LDT), un indicateur de sélection autorisée au plus tôt (EDT) et un indicateur de moment optimal (ODT) sont affectés à chaque sous-ensemble, ces indicateurs correspondant, dans chaque sous-ensemble, à des positions temporelles différentes ;
   - les moyens de sélection prioritaire d'objet (36) comprennent des moyens supplémentaires adaptés pour engendrer un signal de recherche (SSP) d'indicateurs de priorité temporelle pour chacun des sous-ensembles dont l'indicateur de sélection autorisée au plus tôt (EDT) a atteint ces moyens de sélection prioritaire d'objet en passant au-delà de la plus petite position temporelle pour atteindre la position temporelle du serveur ; et

   - les moyens de sélection de première position temporelle (38) comprennent des moyens additionnels adaptés pour effectuer deux phases successives de sélection des autres indicateurs de priorité (LDT ; ODT), d'abord étant présélectionné l'objet (ou les objets) dont la position temporelle de l'indicateur de dernier moment (LDT) a la plus petite valeur, puis étant sélectionné, parmi les sous-ensembles présélectionnés, l'objet (ou les objets) dont la position temporelle de l'indicateur de moment optimal (ODT) a la plus petite valeur.

15. Dispositif selon la revendication 14, **caractérisé en ce que** les moyens de sélection prioritaire d'objet (36) comportent également, pour chaque sous-ensemble, une mémoire ($70_i$) adaptée pour enregistrer

   - une information de sélection autorisée dès que la position temporelle de l'indicateur de priorité de sélection autorisée (EDT) a atteint la position temporelle du serveur ; et
   - une information de position optimale atteinte dès que la position temporelle de l'indicateur de priorité de position optimale (ODT) a atteint la position temporelle du serveur.

16. Dispositif selon la revendication 14 ou 15, **caractérisé en ce que** les moyens de sélection prioritaire d'objet (36) sont connectés à chaque sous-ensemble du réseau d'éléments par l'intermédiaire :

   - d'une ligne sortante connectée à l'élément du sous-ensemble qui correspond à la position temporelle ayant la plus grande valeur, adaptée pour lui permettre d'engendrer, pour le sous-ensemble correspondant, un signal d'activation de recherche d'indicateurs (SSP), adapté pour déclencher une opération de recherche d'un premier indicateur à sélectionner en priorité dans le sous-ensemble ; et
   - d'une ligne entrante provenant de l'élément du sous-ensemble qui correspond à la position temporelle ayant la plus petite valeur, adaptée pour lui permettre de recevoir un signal d'objet sélectionné, et d'effectuer le choix final d'au moins un objet devant être servi parmi les sous-ensembles desquels il reçoit un signal d'objet sélectionné.

**17.** Dispositif selon les revendications 6, 8 ou 16, **caractérisé en ce que** chaque élément de mémorisation ( $34'_{ij}$, $34''_{ij}$) est connecté :

-    à l'élément du même sous-ensemble correspondant à la position temporelle adjacente supérieure, par une entrée (88,) de recherche d'indicateurs adaptée pour recevoir un signal de recherche d'indicateurs (SSP), l'élément du sous-ensemble ayant la plus grande valeur de position temporelle recevant un signal de recherche d'indicateurs (SSP) fourni par les moyens de sélection prioritaire d'objets (36),

-    et à l'élément de mémorisation, du même sous-ensemble correspondant à la position temporelle adjacente inférieure, par une sortie ($88'_i$) de recherche d'indicateurs adaptée pour transmettre un signal de recherche d'indicateurs (SSP), l'élément ayant la plus petite valeur de position temporelle adaptée pour fournir aux moyens de sélection prioritaire d'objet (36) ce signal de recherche d'indicateurs qui, lorsqu'il est actif, signifie, pour ces moyens, un signal d'objet sélectionné ; et **en ce que** chaque élément de mémorisation :

    -    active la ligne commune entrante correspondante des moyens de sélection temporelle (38), pour transmettre à ces derniers un signal de position temporelle candidate pour sélection lorsque, simultanément, un signal de recherche d'indicateurs (SSP) actif est reçu et ledit indicateur de priorité temporelle est marqué dans la mémoire de cet élément est adaptée pour

    -    activer un signal local d'indicateur de priorité non sélectionné lorsque simultanément :

        -    un signal de recherche d'indicateurs (SSP) actif est reçu,
        -    un indicateur de priorité temporelle est marqué dans sa mémoire,
        -    et un signal de position temporelle retenue n'est pas reçu de la ligne commune sortante provenant des moyens de sélection temporelle (38) ;

    -    et retransmettre à l'élément du même sous-ensemble qui a la position temporelle adjacente inférieure, un signal de recherche d'indicateurs (SSP) actif si simultanément :

        -    un signal de recherche d'indicateurs (SSP) actif est reçu, et :

            -    soit l'élément n'a pas d'indicateur de priorité temporelle marqué dans sa mémoire,

            -    soit l'élément a un indicateur de priorité temporelle marqué dans sa mémoire et le signal local indicateur de priorité non sélectionné n'est pas activé, le signal local indicateur de priorité non sélectionné ayant donc pour effet de bloquer la propagation du signal de recherche d'indicateurs (SSP) vers les autres éléments du sous-ensemble de rang inférieur lorsque l'élément a transmis un signal de position temporelle candidate pour sélection aux moyens de sélection temporelle (38), mais que ces moyens n'ont pas retourné un signal de position temporelle

**18.** Application du dispositif selon l'une quelconque des revendications précédentes à la gestion des priorités de cellules ou paquets de signaux numériques dans une mémoire tampon d'un système de télécommunication dans laquelle les cellules ou paquets entrent et sortent à une fréquence élevée.

## Patentansprüche

**1.** Vorrichtung (30, $30_1$) zur Bestimmung der Reihenfolge der Weiterleitung von vorübergehend in einem Pufferspeicher gespeicherten Objekten, wobei diesen Objekten mindestens ein Prioritätsindikator zugeordnet ist und diese Vorrichtung über folgendes verfügt:

-    eine Gruppe von Speicherelementen ($34_{ij}$, $34'_{ij}$, $34''_{ij}$) mit RAM-Speichern ($42_{ij}$, $80_{ij}$), die gemäß einem in C Untergruppen von Elementen organisierten Matrixnetz (32) angeordnet sind, wobei C die Anzahl von Objekten ist, die vorübergehend gespeichert werden können; jede dieser Untergruppen entspricht einem Objekt, und sämtliche Untergruppen umfassen die gleiche Anzahl P von Elementen, die P Zeitlagen entsprechen, wobei jedes Element einen Speicher ($42_{ij}$, $80_{ij}$) umfasst, der mindestens einen Typ von Indikator (LDT, EDT, ODT) der zeitlichen Priorität empfangen kann,

-    Mittel (R, S, $60_{ij}$, $62_{ij}$), um beim Empfang eines neuen Objekts einen Indikator der zeitlichen Priorität in das Speicherelement einzutragen, das diesem Objekt und der diesem Objekt zugeordneten Zeitlage entspricht,

-    Mittel zur Auswahl einer ersten Zeitlage (38), um in dem Netz unter sämtlichen Untergruppen das Element (oder die Elemente) zu bestimmen, das (die) durch einen bestimmten Indikator der zeitlichen Priorität eines bestimmten Typs (LDT) gekennzeichnet ist (sind) und das (die) der Zeitlage mit dem kleinsten Wert entspricht (entsprechen).

**2.** Vorrichtung gemäß Anspruch 1, **dadurch gekennzeichnet, dass** sie außerdem Mittel zur vorrangigen Auswahl von Objekten (36) umfasst, mit denen mindestens eine der Untergruppen, die durch die Mittel zur Auswahl einer ersten Zeitlage (38) in eine Vorauswahl gelangt sind, ausgewählt werden kann.

**3.** Vorrichtung gemäß Anspruch 1 oder 2, **dadurch gekennzeichnet, dass** sie über geeignete Mittel verfügt, um das Fortschreiten der Taktgeberzeit zu berücksichtigen, sowie über Mittel, um bei jeder Taktgeberzeit eine Verschiebung einer Zeitlage zwischen den Indikatoren der zeitlichen Priorität jeder Untergruppe und dem entsprechenden Rang ihrer Zeitlage einzuführen, sodass deren neuer Rang der benachbarten, niedrigeren Zeitlage entspricht.

**4.** Vorrichtung gemäß Anspruch 3, **dadurch gekennzeichnet, dass** mit den Mitteln, die dazu geeignet sind, bei jeder Taktgeberzeit eine Verschiebung vorzunehmen, diese Verschiebung einer Zeitlage dadurch erfolgt, dass der Speicherinhalt jedes Elements in das benachbarte Element verschoben wird, das der benachbarten, niedrigeren Zeitlage entspricht.

**5.** Vorrichtung gemäß Anspruch 2, **dadurch gekennzeichnet, dass** die Mittel zur vorrangigen Auswahl eines Objekts (36) mittels einer pro Untergruppe eingehenden Leitung an die Speicherelemente angeschlossen sind, wobei diese Leitung geeignet ist, ein Signal eines ausgewählten Objekts zu übermitteln, und die genannten Mittel geeignet sind, die endgültige Auswahl mindestens eines Objektes vorzunehmen, das unter den Objekten der ein Signal eines ausgewählten Objekts übertragenden Untergruppen weitergeleitet werden soll.

**6.** Vorrichtung gemäß einem der Ansprüche 1 bis 5, **dadurch gekennzeichnet, dass** die Mittel zur Auswahl einer ersten Zeitlage (38) mittels zweier gemeinsamer Leitungen für jede der P Zeitlagen an die Speicherelemente angeschlossen sind, und zwar mittels:

- einer gemeinsamen, eingehenden Leitung ($50_i$, $50_j$, $50_j$, $50^2_j$), die dazu geeignet ist, ein Signal einer Zeitlage, die ausgewählt werden kann, zu empfangen,
- einer gemeinsamen, abgehenden Leitung ($52_i$, $52'_j$, $52^1_j$, $52^2_j$), die dazu geeignet ist, ein Signal einer vorgemerkten Zeitlage zu übertragen,

sowie **dadurch gekennzeichnet, dass** die Mittel zur Auswahl einer ersten Zeitlage (38) geeignet sind, einerseits unter den P Signalen, die auf den gemeinsamen, eingehenden Leitungen empfangen werden, das erste Signal einer Zeitlage, die ausgewählt werden kann und die der Zeitlage mit dem niedrigsten Wert entspricht, zu identifizieren, und andererseits diese erste ausgewählte Zeitlage anzugeben, indem sie auf der gemeinsamen, abgehenden Leitung ein Signal der vorgemerkten Zeitlage überträgt, das der ersten ausgewählten Zeitlage entspricht.

**7.** Vorrichtung gemäß einem der vorhergehenden Ansprüche, **dadurch gekennzeichnet, dass** für jede Untergruppe die Zeitlage des Elements, in dem sich ein Indikator der zeitlichen Priorität befindet, den gewünschten Zeitpunkt für die Ausführung der Weiterleitung des Objekts dieser Untergruppe gegenüber den übrigen Objekten darstellt, wobei die Mittel zur Auswahl einer ersten Zeitlage (38) geeignet sind, vorrangig das Objekt (oder die Objekte) auszuwählen, dessen (deren) Prioritätsindikator in einem Element angeordnet ist, das der Zeitlage mit dem kleinsten Wert entspricht.

**8.** Vorrichtung gemäß den Ansprüchen 5, 6 oder 7, **dadurch gekennzeichnet, dass** jedes Speicherelement:

- geeignet ist, die gemeinsame eingehende Leitung, die den Mitteln zur Auswahl einer ersten Zeitlage (38) entspricht, zu aktivieren, um an diese ein Signal einer Zeitlage, die ausgewählt werden kann, zu übertragen, sofern der genannte Indikator der zeitlichen Priorität in seinem Speicher vermerkt ist,
- geeignet ist, von den Mitteln zur Auswahl einer ersten Zeitlage (38) auf einer gemeinsamen abgehenden Leitung der Zeitlagen ein Signal einer vorgemerkten Zeitlage zu empfangen, wenn diese Mittel zur Auswahl einer ersten Zeitlage (38) angeben, dass die Zeitlage dieses Elements ausgewählt worden ist, und
- geeignet ist, auf einer gemeinsamen Leitung der Untergruppen ein Signal eines ausgewählten Objekts zu erzeugen, das für die Mittel zur vorrangigen Auswahl eines Objekts (36) bestimmt ist, wenn gleichzeitig:

  - der Indikator der zeitlichen Priorität in seinem Speicher vermerkt ist,
  - und das Signal der vorgemerkten Zeitlage von der gemeinsamen abgehenden Leitung der Mittel zur Auswahl einer ersten Zeitlage empfangen wird.

**9.** Vorrichtung gemäß Anspruch 7, **dadurch gekennzeichnet, dass** für jede Untergruppe ein Indikator der zeitlichen Priorität (LDT) den letzten gewünschten Zeitpunkt darstellt, um die Weiterleitung des Objekts auszuführen.

10. Vorrichtung gemäß Anspruch 9, **dadurch gekennzeichnet, dass** jeder Untergruppe auch mindestens einer und/oder der anderen der beiden folgenden zusätzlichen Prioritätsindikatoren zugeordnet ist:

Ein Indikator der Zeitlage der frühestmöglichen Auswahl (EDT), vor der das Objekt nicht weitergeleitet werden kann, wobei dieser Indikator eine Zeitlage mit einem kleineren Wert als der Indikator (LDT) besitzt, der den letzten gewünschten Zeitpunkt für die Ausführung der Weiterleitung darstellt,
und ein Indikator der Zeitlage der optimalen Auswahl (ODT) zur Ausführung der Weiterleitung, wobei die Zeitlage dieses Indikators einen niedrigeren Wert als der Indikator des letzten gewünschten Zeitpunktes für die Ausführung der Weiterleitung besitzt,
sowie **dadurch gekennzeichnet, dass** wenn diese beiden zusätzlichen Prioritätsindikatoren gleichzeitig vorhanden sind, der Indikator der Zeitlage der optimalen Auswahl (ODT) einen Wert aufweist, der höher als derjenige des Indikators der frühestmöglichen Auswahl (EDT) ist, vor dem das Objekt nicht weitergeleitet werden kann.

11. Vorrichtung gemäß einem der vorstehenden Ansprüche, **dadurch gekennzeichnet, dass** jeder Untergruppe mehrere Indikatoren der zeitlichen Priorität verschiedener Typen (LDT, ODT, EDT) zugeordnet sind, und die Vorrichtung über eine Anzahl von Netzen von Indikatorelementen verfügt, die der Anzahl von Indikatorentypen entspricht.

12. Vorrichtung gemäß einem der vorstehenden Ansprüche, **dadurch gekennzeichnet, dass** jeder Untergruppe mehrere Indikatoren verschiedener Typen (LDT, ODT, EDT) zugeordnet sind, und jedes Element über eine Anzahl von Speicherpunkten $(42^1_j, 42^2_j)$ verfügt, die mindestens der Anzahl von Indikatorentypen entspricht, wobei jeder Speicherpunkt einem bestimmten Indikatortyp zugeordnet ist.

13. Vorrichtung gemäß Anspruch 10, **dadurch gekennzeichnet, dass** sie über Mittel zur Suche nach Indikatoren verfügt, die dazu geeignet sind, während einer ersten Phase in jeder Untergruppe den ersten Indikator der zeitlichen Priorität zu suchen, der unter sämtlichen Indikatoren der Untergruppe die Zeitlage mit dem höchsten Wert aufweist, und nachdem eine Vorauswahl der Untergruppen getroffen worden ist, die diesen ersten Indikator mit der niedrigsten Zeitlage aufweisen, während einer zweiten Phase die Suche nach den folgenden Indikatoren mit einer niedrigeren Zeitlage in den voraus gewählten Untergruppen auszuführen, sowie die Untergruppen auszuwählen, die einen Indikator aufweisen, der auf die niedrigste Zeitlage folgt.

14. Vorrichtung gemäß Anspruch 13, **dadurch gekennzeichnet, dass**:

- jedes Element dazu geeignet ist, einen einzigen Prioritätsindikator zu speichern,
- jeder Untergruppe ein Indikator des letzten Zeitpunktes (LDT), ein Indikator der frühestmöglichen Auswahl (EDT) und ein Indikator des optimalen Zeitpunktes (ODT) zugeordnet sind, wobei diese Indikatoren in jeder Untergruppe verschiedenen Zeitlagen entsprechen,
- die Mittel zur vorrangigen Auswahl eines Objekts (36) über zusätzliche Mittel verfügen, die dazu geeignet sind, ein Suchsignal (SSP) nach Indikatoren der zeitlichen Priorität für jede der Untergruppen zu erzeugen, deren indikator der frühestmöglichen Auswahl (EDT) diese Mittel der vorrangigen Auswahl eines Objekts erreicht hat, indem er die kleinste Zeitlage überschreitet und die Zeitlage des Servers erreicht, und
- die Mittel zur Auswahl einer ersten Zeitlage (38) zusätzliche Mittel umfassen, die dazu geeignet sind, zwei aufeinander folgende Phasen der Auswahl der übrigen Prioritätsindikatoren (LDT, ODT) durchzuführen, indem zunächst eine Vorauswahl des Objekts (oder der Objekte) durchgeführt wird, dessen (deren) Zeitlage des Indikators des letzten Zeitpunktes (LDT) den kleinsten Wert aufweist (aufweisen), und indem anschließend unter den voraus gewählten Untergruppen das Objekt (oder die Objekte) ausgewählt wird (werden), deren Zeitlage des Indikators des optimalen Zeitpunktes (ODT) den kleinsten Wert besitzt.

15. Vorrichtung gemäß Anspruch 14, **dadurch gekennzeichnet, dass** die Mittel zur vorrangigen Auswahl eines Objekts (36) ebenfalls für jede Untergruppe über einen Speicher $(70_j)$ verfügen, der dazu geeignet ist, folgendes zu speichern:

- eine Information über die zulässige Auswahl, sobald die Zeitlage des Prioritätsindikators der zulässigen Auswahl (EDT) die Zeitlage des Servers erreicht hat, und
- eine Information über die optimale Lage, die erreicht wird, sobald die Zeitlage des Prioritätsindikators der optimalen Lage (ODT) die Zeitlage des Servers erreicht hat.

**16.** Vorrichtung gemäß Anspruch 14 oder 15, **dadurch gekennzeichnet, dass** die Mittel zur vorrangigen Auswahl eines Objekts (36) an jede Untergruppe des Netzes von Elementen angeschlossen sind mittels:

- einer abgehenden Leitung, die an das Element der Untergruppe angeschlossen ist, das der Zeitlage mit dem größten Wert entspricht, und die dazu geeignet ist, es diesen zu ermöglichen, für die entsprechende Untergruppe ein Bestätigungssignal zur Suche nach Indikatoren (SSP) zu erzeugen, das wiederum dazu geeignet ist, einen Suchvorgang nach einem ersten Indikator auszulösen, der vorrangig in der Untergruppe auszuwählen ist, und

- einer eingehenden Leitung, die von dem Element der Untergruppe, das der Zeitlage mit dem kleinsten Wert entspricht, kommt und die dazu geeignet ist, es diesen zu ermöglichen, ein Signal eines ausgewählten Objekts zu empfangen und die endgültige Auswahl mindestens eines Objektes vorzunehmen, das unter den Untergruppen weitergeleitet werden soll, von denen sie ein Signal eines ausgewählten Objekts empfangen.

**17.** Vorrichtung gemäß den Ansprüchen 6, 8 oder 16, **dadurch gekennzeichnet, dass** jedes Speicherelement ($34'_{ij}$, $34''_{ij}$) folgendermaßen angeschlossen ist:

- durch einen Eingang ($88_j$) zur Suche nach Indikatoren, der dazu geeignet ist, ein Suchsignal nach Indikatoren (SSP) zu empfangen, an das Element derselben Untergruppe, das der nächst höheren Zeitlage entspricht, wobei das Element der Untergruppe mit dem größten Wert der Zeitlage ein von den Mitteln zur vorrangigen Auswahl von Objekten (36) übermitteltes Suchsignal nach Indikatoren (SSP) empfängt,

- durch einen Ausgang ($88'_j$) zur Suche nach Indikatoren, der dazu geeignet ist, ein Suchsignal nach Indikatoren (SSP) zu übertragen, an das Speicherelement derselben Untergruppe, das der nächst niedrigeren Zeitlage entspricht, wobei das Element mit dem kleinsten Wert der Zeitlage dazu geeignet ist, an die Mittel zur vorrangigen Auswahl eines Objekts (36) dieses Suchsignal nach Indikatoren zu übermitteln, das in aktivem Zustand für diese Mittel ein Signal eines ausgewählten Objekts bedeutet, sowie **dadurch gekennzeichnet, dass** jedes Speicherelement dazu geeignet ist,

- die gemeinsame, eingehende Leitung, die den Mitteln der zeitlichen Auswahl (38) entspricht, zu aktivieren, um an diese ein Signal der Zeitlage, die ausgewählt werden kann, zu übertragen, wenn gleichzeitig ein aktives Suchsignal nach Indikatoren (SSP) empfangen wird und der genannte Indikator der zeitlichen Priorität in dem Speicher dieses Elements vermerkt ist,

- ein lokales Signal eines nicht ausgewählten Prioritätsindikators zu aktivieren, wenn gleichzeitig:

  - ein aktives Suchsignal nach Indikatoren (SSP) empfangen wird,
  - ein Indikator der zeitlichen Priorität in seinem Speicher vermerkt ist, und
  - auf der gemeinsamen, abgehenden Leitung, die von dem Mitteln der zeitlichen Auswahl (38) kommt, kein Signal einer vorgemerkten Zeitlage empfangen wird,

- und ein aktives Suchsignal nach Indikatoren (SSP) an das Element derselben Untergruppe mit der nächst niedrigeren Zeitlage weiterzuleiten, wenn gleichzeitig:

  - ein aktives Suchsignal nach Indikatoren (SSP) empfangen wird, und
  - entweder das Element keinen Indikator der zeitlichen Priorität in seinem Speicher vermerkt hat,
  - oder das Element einen Indikator der zeitlichen Priorität in seinem Speicher vermerkt hat und das lokale Signal eines nicht ausgewählten Prioritätsindikators nicht aktiviert ist, wobei das lokale Signal eines nicht ausgewählten Prioritätsindikators dazu führt, dass die Ausbreitung des Suchsignals nach Indikatoren (SSP) an die übrigen Elemente der Untergruppe mit einem niedrigeren Rang blockiert wird, wenn das Element ein Signal einer Zeitlage, die in den Mitteln der zeitlichen Auswahl (38) ausgewählt werden kann, übermittelt hat, diese Mittel jedoch kein Signal einer vorgemerkten Zeitlage zurückgesandt haben.

**18.** Anwendung der Vorrichtung gemäß einem der vorhergehenden Ansprüche zur Steuerung der Prioritäten von Zellen oder Paketen digitaler Signale in einem Pufferspeicher eines Telekommunikationssystems, in dem die Zellen oder Pakete mit einer hoen Frequenz ein- und ausgegeben werden.

## Claims

**1.** A system ($30$, $30_1$) for determining the order of service of temporarily stored objects in a buffer, at least one priority flag being attached to these objects, said system including:

- a set of storage units ($34_{ij}$; $34_{ij}'$; $34_{ij}''$) comprising random access memory ($42_{ij}$; $80_{ij}$) and disposed in a matrix array (32) organized into C subsets of elements, where C is the number of objects which can be stored temporarily, each of said subsets corresponding to an object and all the subsets including the same number P of elements corresponding to P time positions, each element including a memory ($42_{ij}$; $80_{ij}$) which can receive at least one type of time priority flag (LDT, EDT, ODT), and

- means (R, S, $60_{ij}$, $62_{ij}$) for writing, on receipt of a new object, a time priority indicator in the storage unit corresponding to that object and to the time position assigned to that object, and

- first time position selection means (38) for determining, in the network, from all the subjects, the element that is (or the elements that are) marked by a particular type of time priority flag (LDT) and corresponds (or correspond) to the time position having the lowest value.

2. A system according to claim 1 further including object priority selector means (36) for selecting at least one of said subsets preselected by said first time position selector means (38).

3. A system according to claim 1 or 2, it includes means adapted to allow for the advancing clock time, and means for introducing at each clock time an offset of one time position between said time priority flags of each subset and the rank corresponding to their time position so that their new rank corresponds to the next lower time position.

4. A system according to claim 3 **characterized in that** the means adapted to introduce, at each clock time an offset, are adapted to carry out said offset by one time position is effected [sic] by transferring the content of said memory of each element to the next element corresponding to the next lower time position.

5. A system according to claim 2 **characterized in that** said object priority selector means (36) are connected to said memory elements by means of one incoming conductor per subset adapted to transmit a selected object signal and are adapted to effect the final choice of at least one object to be serviced from the objects corresponding to the subsets transmitting a selected object signal.

6. A system according to any one of claims 1 to 5, **characterized in that** said first time position selector means (38) are connected to said memory elements by two common conductors for each of said P time positions, namely:

- an incoming common conductor ($50_i$; $50_i'$; $50_i$; $50_i^2$;) suitable for receiving a time position signal that is a candidate for selection, and

- an outgoing common conductor ($52_i$; $52_j'$; $52_i^1$; $52_i^2$) suitable for transmitting a retained time position signal, and **characterized in that** said first time position selector means (38) are adapted, firstly, to identify, among the P signals received on said incoming common conductors, the first time position signal which is a candidate for selection corresponding to the time position having the smallest value and, secondly, adapted to indicate the selected first time position by transmitting a retained time position signal on said outgoing common conductor corresponding to the selected first time position.

7. A system according to any preceding claim **characterized in that**, for each subset, said time position of said element containing a time priority flag represents the required time of servicing the object corresponding to that subset relative to the other objects, said first time position selector means (38) being adapted to give priority to selecting the object(s) whose priority flag is in an element corresponding to said time position with the lowest value.

8. A system according to claim 5, 6 or 7 **characterized in that** each memory element:

- is adapted to activate the corresponding incoming common conductor of said first time position selector means (38) to transmit thereto a time position signal which is a candidate for selection if said time priority flag is marked in its memory,

- is adapted to receive from said first time position selector means (38), over an outgoing common conductor for each time position, a retained time position signal if said first time position selector means (38) indicate that said time position of that element has been selected, and

- is adapted to generate, on one common conductor per subset, a selected object signal addressed to said priority object selector means (36), if, simultaneously:

- said time priority flag is marked in its memory, and

- said retained time position signal is received from said outgoing common conductor of said first time position selector means.

9. A system according to claim 7 **characterized in that** a time priority flag (LDT) for each subset represents the required latest time for servicing the object.

10. A system according to claim 9 **characterized in that** one or both of the following two additional priority flags is or are also added to each subset:

a flag of the earliest authorized selection time position (EDT) before which the object cannot be serviced, said flag having a time position of smaller value than that of said flag (LDT) representing the latest required time for service, and a flag of the optimum selection time position (ODT) for service, said time position of said flag having a value less than that of said flag of the last required time for service, and wherein, if these two additional priority flags are present simultaneously, said optimum selection time position flag (ODT) has a value which is greater than that of said earliest authorized selection flag (EDT) before which said object cannot be serviced.

11. A system according to any preceding claim **characterized in that** a plurality of different type time priority flags (LDT, ODT, EDT) is attached to each subset and said system includes a number of flag element matrices equal to the number of types of flag.

12. A system according to any preceding claim **characterized in that** a plurality of flags of different types (LDT, ODT, EDT) is allocated to each subset, each element includes a number of memory points ($42_j^1$; $42_j^2$) at least equal to the number of types of flag and each memory point is allocated to a flag of a particular type.

13. A system according to claim 10 including flag search means adapted to search during a first phase, each subset for the first time priority flag which, of all said flags of said subset, has the time position of the highest value, and carries out, after preselecting said subsets which have said first time position flag of the lowest value, during a second phase, a search for the subsequent flags of lower time position in the preselected subsets and selects the subsets which have a subsequent flag at the lowest time position.

14. A system according to claim 13 **characterized in that**:

- each element is adapted to store a single priority flag,
- a last time flag (LDT), an earliest authorized selection flag (EDT) and an optimum time flag (ODT) are allocated to each subset, said flags corresponding in each subset to different time positions,
- said object priority selector means (36) include additional means suitable for generating a time priority flag search signal for each of said subsets whose earliest authorized selection flag (EDT) has reached said object priority selector means on going beyond the lowest time position to reach the time position of the server, and
- said first time position selector means (38) include additional means suitable for effecting two successive phases of selection of other priority flags (LDT; ODT), first with the object(s) being preselected whose time position of the latest time flag (LDT) has the lowest value, and then with the object(s) whose time position of the optimum time flag (ODT) has the lowest value being selected from the preselected subsets.

15. A system according to claim 14 **characterized in that** the object priority selector means (36) further include, for each subset, a memory ($70_i$) adapted to store:

- authorized selection information as soon as the time position of the authorized selection priority flag (EDT) has reached the time position of the server, and
- optimum position reached information as soon as the time position of the optimum position priority flag (ODT) has reached the time position of the server.

16. A system according to claim 14 or 15 **characterized in that** said object priority selector means (36) are connected to each subset of said matrix of elements by:

- an outgoing conductor connected to said element of said subset that corresponds to said time position having the highest value, suitable for enabling it to generate, for the corresponding subset, a flag search activation signal (SSP) suitable for initiating an operation searching for a first flag to be selected as a matter of priority in said subset, and
- an incoming conductor from said element of said subset that corresponds to said time position having the lowest value, suitable for enabling it to receive a selected object signal and to effect the final choice of at least one object to be serviced from the subsets from which it receives a selected object signal.

17. A system according to claim 6, 8 or 16 **characterized in that** each storage element ($34'_{ij}$, $34''_{ij}$) is connected:

- to the element of the same subset corresponding to the next higher time position, via a flag search input ($88_i$) suitable for receiving a flag search signal (SSP), said element of said subset having the time position with the highest value receiving a flag search signal (SSP) supplied by said object priority selector means (36), and
- to the memory element of the same subset corresponding to the next lower time position, via a flag search output ($88'_j$) suitable for transmitting a flag search signal (SSP), the element having the lowest time position value suitable for supplying said flag search signal to said object priority selector means (36), which signal, if it is active, signifies a selected object signal for those means, and wherein each memory element is adapted to:

  - activate the corresponding incoming common conductor of said time selector means (38) to transmit thereto a time position signal which is a candidate for selection if, simultaneously, an active flag search signal (SSP) is received and said time priority flag is marked in said memory of said is adapted to,
  - activate an unselected local priority flag signal if, simultaneously:

    - an active flag search signal (SSP) is received,
    - a time priority flag is marked in its memory, and
    - no retained time position signal is received from said outgoing common conductor of said time selection means (38), and
    - retransmit to said element of the same subset which has the next lower time position a flag search signal (SSP) which is active if, simultaneously:

      - an active flag search signal (SSP) is received, and
      - either said element has no time priority flag marked in its memory,
      - or said element has a time priority flag marked in its memory and said unselected local priority flag signal is not activated, the effect of the unselected local priority flag signal then being to block the propagation of said flag search signal (SSP) to the other elements of the subset of lower rank if the element has transmitted a time position signal which is a candidate for selection to said time selector means (38) but said means have not returned a retained time position signal.

18. Application of a system as claimed in any preceding claim to managing priorities of cells or packets of digital signals in a telecommunication system buffer which cells or packets enter and leave at a high frequency.

FIG.1

FIG.2

FIG.2a

FIG.2b

FIG.3

FIG.4a

FIG.4b

FIG.4c

FIG.5a

FIG.5b

FIG.6

FIG.7a

FIG.7b

FIG.8

FIG.9

FIG.10

FIG.11

FIG.12a

FIG.12b

FIG.12c

FIG.12d

FIG.12e

FIG.12f

FIG.12g

FIG.13